(19) Europäisches Patentamt / European Patent Office / Office européen des brevets

(11) **EP 4 053 217 A1**

(12) **EUROPEAN PATENT APPLICATION**
published in accordance with Art. 153(4) EPC

(43) Date of publication:
**07.09.2022 Bulletin 2022/36**

(21) Application number: **20882760.0**

(22) Date of filing: **30.10.2020**

(51) International Patent Classification (IPC):
*C08L 77/00* (2006.01)    *C08K 11/00* (2006.01)
*C08L 1/08* (2006.01)

(52) Cooperative Patent Classification (CPC):
**C08K 11/00; C08L 1/08; C08L 77/00**

(86) International application number:
**PCT/JP2020/040940**

(87) International publication number:
**WO 2021/085630 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.10.2019 JP 2019197799**

(71) Applicant: **Asahi Kasei Kabushiki Kaisha
Tokyo 1000006 (JP)**

(72) Inventors:
- **MAEKAWA, Tomofumi
  Tokyo 100-0006 (JP)**
- **KUSUMOTO, Sara
  Tokyo 100-0006 (JP)**

(74) Representative: **D Young & Co LLP
120 Holborn
London EC1N 2DY (GB)**

(54) **CELLULOSE MICROFIBER-REINFORCED POLYAMIDE RESIN MOLDED ARTICLE**

(57)    Provided is a polyamide resin molded article capable of achieving high mechanical properties and dimensional accuracy as well as low friction coefficient, low wear, and/or low abrasion property. One embodiment of the present invention provides a polyamide resin molded article composed of a polyamide resin composition including (A) a polyamide resin, (B) chemically modified cellulose microfibers having a weight average molecular weight (Mw) of 100,000 or more, a ratio (Mw/Mn) of the weight average molecular weight (Mw) and the number average molecular weight (Mn) of 6 or less, an alkali-soluble polysaccharides average content of 12 mass percent or less, and a degree of crystallization of 60% or more, and (C) a dispersant having a melting point of 80°C or less and a number average molecular weight of 1000-50,000, wherein the melting point (Tm) and the crystallization temperature (Tc) of the polyamide resin molded article satisfy formula (1): $Tm - Tc \geqq 30°C$ ... (1).

EP 4 053 217 A1

**Description**

FIELD

The present invention relates to a cellulose nanofiber-reinforced polyamide resin molded body.

BACKGROUND

Polyamide resins have high heat resistance and chemical resistance, as well as excellent processing characteristics, and are therefore widely used for a variety of purposes including automobile parts, electrical and electronic parts, business machine housings, precision parts. However, with resins alone often has insufficient the mechanical properties, slidability, thermal stability and dimensional stability , and it is common to use composites of resins with different types of inorganic materials.

The polyamide resins reinforced with inorganic filler reinforcing materials such as glass fibers, carbon fibers, talc or clay has high mechanical properties and wear resistance properties, and are therefore commonly used in sliding parts. PTL 1, for example, describes a polyamide resin composition having glass fibers with mean fiber sizes of 4 to 8 $\mu$m added in a specified proportion to polyamide 66 having a number-average molecular weight in a specified range. However, since inorganic fillers such as glass fibers have high specific gravity, the weight of the resulting molded resin increases. A polyamide resin composition comprising glass fibers has poor abrasion properties and wear the sliding mating materials. In addition, because it has high mold shrinkage after injection molding and a large coefficient of linear thermal expansion, when used in resin gears, it exceeds the allowable dimensional tolerance leading to problems such as noise when the gears engage, and also produces greater load at certain portions of the gears, leading to deformation and breakage. In recent years, cellulose which has a low environmental load and low specific gravity has come to be investigated as a new reinforcing material for resins.

As a properties of its own, cellulose is known to have a high elastic modulus comparable to aramid fibers, and a lower coefficient of linear expansion than glass fibers. In addition, it exhibits a low true density of 1.56 g/cm$^3$, which is overwhelmingly lighter than glass (density: 2.4 to 2.6 g/cm$^3$) or talc (density: 2.7 g/cm$^3$), materials that are commonly used as reinforcing materials for thermoplastic resins.

Cellulose is not only made from trees, but also from hemp, cotton, kenaf and cassava starting materials. Bacterial celluloses are also known, typical of which is nata de coco. There are a large amount of natural resources as raw materials for cellulose on the Earth, and a great deal of attention has been focused on techniques for exploiting cellulose as a filler in resins so that they can be effectively utilized.

Cellulose nanofibers (CNF) are made from pulp and other materials , hydrolyzed to weaken the hemicellulose portion , and then defibrating by using a pulverizing method such as a high-pressure homogenizer, microfluidizer, ball mill or disk mill, and in water they form a very finely dispersed state known as a "nanodispersion", which is also a network.

In order to add cellulose nanofibers to a resin, cellulose nanofibers have to be dried and powdered, but cellulose nanofibers form firm aggregates from a microdispersed state during the process of separation from water, and it makes them difficult to redisperse. This aggregating force is exhibited due to hydrogen bonding by the hydroxyl groups of the cellulose, and it is considered to be extremely strong.

To ensure adequate performance, therefore, it is necessary to relax the hydrogen bonding by the hydroxyl groups of the cellulose. Even if the hydrogen bonds can be relaxed, however, it is still difficult to maintain a defibrated state (nanometer size, or <1 $\mu$m) in the resin.

PTL 2 describes a slidable resin composition using cellulose with the surface hydroxyl groups replaced with hydrophobic groups. PTL 3 describes a gear molded body comprising a thermoplastic resin that comprises cellulose aggregates with minimum thicknesses of 1 $\mu$m or more on the surface of the gear.

[CITATION LIST]

[PATENT LITERATURE]

[PTL 1] International Patent Publication No. WO2006/054774
[PTL 2] Japanese Unexamined Patent Publication No. 2017-171698
[PTL 3] Japanese Unexamined Patent Publication No. 2014-248824

SUMMARY

[TECHNICAL PROBLEM]

In PTL 2 describes the sliding property of a molded article made of a compound product of cellulose having hydrophobically modified long-chain fatty acid groups and polyoxymethylene, polypropylene or polyethylene, is evaluated by a pin-on-disk test which is a relatively common sliding test, but the sliding property is insufficient after reciprocal sliding test with over 10,000 cycles, as the coefficient of friction deteriorates and the amount of wear increases.

Since the resin gear described in PTL 3 has cellulose aggregates with sizes of greater than 1 $\mu$m on the molded article surface, in a reciprocal sliding test with more than 10,000 cycles, such as in a pin-on-disk test, the pin rubs against the aggregates at an early stage of the reciprocal sliding, significantly impairing the frictional wear. In addition, since the cellulose nanofibers are not uniformly dispersed, the coefficient of linear thermal expansion is high, which has been an issue for the dimensional stability of molded articles.

In other words, these prior arts still have not provided a molded body that has high mechanical properties and dimensional accuracy and also has a satisfactory low friction coefficient and low wear and/or low abrasion wear, for use as a sliding part, and consequently it has been desirable to improve these properties.

According to one aspect, it is an object of the invention to solve this problem by providing a polyamide resin molded body that can simultaneously provide high mechanical properties and dimensional accuracy, as well as a low friction coefficient, low wear and/or low abrasion wear, and which is suitable as a sliding part, for example.

[SOLUTION TO PROBLEM]

Specifically, the present disclosure encompasses the following aspects.

[1] A polyamide resin molded body composed of a polyamide resin composition comprising:

(A) a polyamide resin,
(B) chemically modified cellulose nanofibers having a weight-average molecular weight (Mw) of 100,000 or more, a ratio (Mw/Mn) of weight-average molecular weight (Mw) and number-average molecular weight (Mn) of 6 or less, an average content of alkali-soluble polysaccharides of 12 mass% or less, and the crystallinity of 60% or more,
(C) a dispersing agent having a melting point of 80°C or less and a number-average molecular weight of 1000 to 50,000,

wherein the melting point (Tm) and crystallization temperature (Tc) of the polyamide resin molded body satisfy the relationship represented by the following formula (1):

$$Tm - Tc \geq 30°C \qquad (1).$$

[2] A polyamide resin molded body composed of a polyamide resin composition comprising:

(A) a polyamide resin, and
(B) chemically modified cellulose nanofibers having a weight-average molecular weight (Mw) of 100,000 or more, a ratio (Mw/Mn) of weight-average molecular weight (Mw) and number-average molecular weight (Mn) of 6 or less, an average content of alkali-soluble polysaccharides of 12 mass% or less, and a crystallinity of 60% or more,

wherein the half-width of the temperature-falling crystallization peak is 6.0°C or less, as the half-width of the crystallization peak on temperature rise of the polyamide resin molded body to melting point (Tm) +25°C at 10°C/min, holding for 3 minutes and temperature fall at 10°C/min, using a differential scanning calorimeter (DSC).

[3] The polyamide resin molded body according to aspect 2, wherein the melting point (Tm) and crystallization temperature (Tc) of the polyamide resin molded body satisfy the relationship represented by the following formula (1):

$$Tm - Tc \geq 30°C \qquad (1).$$

[4] The polyamide resin molded body according to aspect 2 or 3, which further comprises (C) a dispersing agent having a melting point of 80°C or less and a number-average molecular weight of 1000 to 50,000.

[5] The polyamide resin molded body according to aspect 1 or 4, wherein the HLB value of the dispersing agent (C) is 0.1 or more and less than 8.0.

[6] The polyamide resin molded body according to any one of aspects 1 to 5, wherein the average degree of chemical modification of the chemically modified cellulose nanofibers (B) is 0.3 to 1.2.

[7] The polyamide resin molded body according to any one of aspects 1 to 6 wherein the chemically modified cellulose nanofibers (B) are esterified cellulose nanofibers.

[8] The polyamide resin molded body according to any one of aspects 1 to 7, wherein the polyamide resin (A) comprises at least one selected from the group consisting of polyamide 6,6, polyamide 6, polyamide 6,1, polyamide 6,10, and copolymers of two or more of the same.

[ADVANTAGEOUS EFFECTS OF INVENTION]

According to one aspect, the invention provides a polyamide resin molded body that can simultaneously provide high mechanical properties and dimensional accuracy , as well as a low friction coefficient, low wear and/or low abrasion wear, and which is suitable as a sliding part, for example.

BRIEF DESCRIPTION OF DRAWINGS

Fig. 1 is pair of graphs illustrating methods for measuring thermal decomposition initiation temperature (Td) and 1% weight reduction temperature.
Fig. 2 is graph illustrating a method for calculating the average degree of substitution of hydroxyl groups in cellulose.
Fig. 3 is a graph illustrating a method for measuring half-width of the temperature-falling crystallization peak.

DESCRIPTION OF EMBODIMENTS

Exemplary modes of the present invention will now be described in detail, with the understanding that they are not limitative on the invention.

One aspect of the invention provides a polyamide resin molded body composed of:
a polyamide resin composition comprising (A) a polyamide resin and (B) chemically modified cellulose nanofibers having a weight-average molecular weight (Mw) of 100,000 or more, a ratio (Mw/Mn) of weight-average molecular weight (Mw) and number-average molecular weight (Mn) of 6 or less, an average content of alkali-soluble polysaccharides of 12 mass% or less, and a crystallinity of 60% or more (also referred to herein as chemically modified cellulose nanofibers (B), or cellulose nanofibers (B)). According to one aspect, the polyamide resin composition further comprises (C) a dispersing agent having a melting point of 80°C or less and a number-average molecular weight of 1000 to 50,000 (also referred to herein as dispersing agent (C)).

According to one aspect, the melting point (Tm) and crystallization temperature (Tc) of the polyamide resin molded body satisfy the relationship represented by the following formula (1):

$$Tm - Tc \geq 30°C \qquad (1).$$

As used herein, the melting point (Tm) of the polyamide resin molded body is the peak top temperature of the endothermic peak appearing on temperature rise from 23°C at a temperature-rising rate of 10°C/min using a differential scanning calorimeter (DSC) under a nitrogen atmosphere. When two or more endothermic peaks appear, it represents the peak top temperature of the highest endothermic peak. The crystallization temperature (Tc) is the peak top temperature of the exothermic peak appearing on temperature rise from 23°C to a temperature 25°C higher than the aforementioned (Tm) at a temperature-rinsing rate of 10°C/min, holding for 5 minutes at that temperature and subsequent temperature fall at a temperature-falling rate of 10°C/min, likewise using a differential scanning calorimeter (DSC). When two or more exothermic peaks appear, it represents the highest peak top temperature of the highest exothermic peak The enthalpy of both the endothermic peak and exothermic peak is preferably 10 J/g or more and more preferably 20 J/g or more. Tm - Tc is an index representing the crystallization rate of the polyamide resin molded body, with a higher Tm - Tc corresponding to a slower crystallization rate. Tm - Tc can be controlled by the type of the polyamide resin (A), the variety of chemical modification and the degree of substitution of the cellulose nanofibers (B), and the type of dispersing agent (C). With a crystallization rate satisfying the condition Tm - Tc ≥ 30°C, exposure of the chemically modified nanofibers to the molded article surface and the molding shrinkage rate of the molded article can be reduced, so that a molded resin with high elasticity, low linear thermal expansibility, low friction coefficient and low wear can be obtained.

If Tm - Tc ≥ 30°C, the cellulose nanofibers (B) will uniformly disperse in the polyamide resin (A), exposure of the cellulose nanofibers (B) to the surface of the polyamide resin molded body will be reduced, and excellent mechanical properties, dimensional stability and sliding properties can be obtained. More preferably, Tm - Tc ≥ 40°C, and most preferably, Tm - Tc ≥ 50°C. In terms of molding processability, Tm - Tc ≤ 120°C is preferred, Tm - Tc ≤ 100°C is more preferred and Tm - Tc ≤ 80°C is most preferred.

According to one aspect, the half-width of the temperature-falling crystallization peak, as the half-width of the crystallization peak on temperature rise of the polyamide resin molded body to melting point (Tm) + 25°C at 10°C/min, holding for 3 minutes and temperature fall at 10°C/min, is 6.0°C or less as measured using a differential scanning calorimeter (DSC). If the half-width of the temperature-falling crystallization peak is 6.0°C or less, then the spherocrystal size of the polyamide resin in the molded body will be fine and uniform, helping to prevent defects from forming in the molded body when the molded body abrades against metals, for example, and it also reduces the amount of the wear. The half-width of the temperature-falling crystallization peak of the polyamide resin molded body is preferably 5.5°C or less, more preferably 5.0°C or less and most preferably 4.5°C or less. The half-width of the temperature-falling crystallization peak is also 1.0°C or more, 1.5°C or more or 2.0°C or more, according to one aspect, in terms of facilitating production of the polyamide resin molded body.

In order to control the half-width of the temperature-falling crystallization peak of the polyamide resin molded body to 6.0°C or less, it is important for the chemically modified cellulose nanofibers (B) to be uniformly dispersed in the polyamide resin (A). The dispersibility of the cellulose nanofibers (B) can be adjusted by the variety of chemical modification and degree of substitution of the cellulose nanofibers (B), and the type of dispersing agent (C). Surprisingly, even with a polyamide resin (A) having a broad temperature-falling crystallization peak, where the half-width of the temperature-falling crystallization peak is 40°C or more, the half-width of the temperature-falling crystallization peak of the molded resin can be 6.0°C or more if the chemically modified cellulose nanofibers (B) are uniformly dispersed in the polyamide resin (A). The spherocrystal size of the polyamide resin (A) is fine and uniform in such a molded resin.

According to one aspect, the polyamide resin composition comprises a polyamide resin (A), chemically modified cellulose nanofibers (B) and a dispersing agent (C), and satisfies Tm - Tc ≥ 30°C.

According to another aspect, the polyamide resin composition comprises a polyamide resin (A), chemically modified cellulose nanofibers (B) and a dispersing agent (C), and the half-width of the temperature-falling crystallization peak is 6.0°C or less.

According to another aspect, the polyamide resin composition comprises a polyamide resin (A) and chemically modified cellulose nanofibers (B) and satisfies Tm - Tc ≥ 30°C, and the half-width of the temperature-falling crystallization peak is 6.0°C or less.

According to yet another aspect, the polyamide resin composition comprises a polyamide resin (A), chemically modified cellulose nanofibers (B) and a dispersing agent (C) and satisfies Tm - Tc ≥ 30°C, and the half-width of the temperature-falling crystallization peak is 6.0°C or less.

<(A) Polyamide resin>

The number-average molecular weight of the polyamide resin (A) is in the range of preferably 10,000 to 150,000, and more preferably 20,000 to 150,000. The number-average molecular weight for the purpose of the present disclosure is the value measured in terms of standard polymethyl methacrylate, using GPC (gel permeation chromatography). The lower limit for the number-average molecular weight is more preferably 22,000, even more preferably 25,000 and most preferably 30,000. The upper limit is more preferably 120,000, even more preferably 100,000 and most preferably 80,000. The number-average molecular weight is preferably above this lower limit from the viewpoint of improving the wear property for metals, and preferably it does not exceed the upper limit from the viewpoint of the flow property of the resin composition during injection molding.

The polyamide resin (A) is preferably a crystalline resin having a melting point in the range of 100°C to 300°C and a glass transition temperature in the range of 0 to 250°C, from the viewpoint of heat resistance and mechanical properties, while from the viewpoint of inhibiting thermal decomposition of the cellulose nanofibers when melt kneaded with the cellulose nanofibers (B), it is more preferably a crystalline resin having a melting point in the range of 100°C to 270°C and a glass transition temperature in the range of 0 to 200°C. The polyamide resin (A) may be constructed of one or more different polymers, which may be homopolymers or copolymers.

As used herein, the "melting point of the polyamide resin molded body" is the peak top temperature of the endothermic peak appearing on temperature rise from 23°C at a temperature-rising rate of 10°C/min using a differential scanning calorimeter (DSC) under a nitrogen atmosphere. When two or more endothermic peaks appear, it represents the peak top temperature of highest the endothermic peak. The enthalpy of the endothermic peak is preferably 10 J/g or more and more preferably 20 J/g or more. During the measurement, preferably the sample is heated once to temperature conditions of (melting point + 20°C) or more, and after the resin has been melted, it is cooled to 23°C at a temperature-falling rate of 10°C/min and used as the sample.

The glass transition temperature of the polyamide resin (A) referred to here is the peak top temperature of the peak where the reduction in storage modulus is high and the loss modulus is maximum, during measurement with an applied frequency of 10 Hz while rising the temperature from 23°C at a temperature-rising rate of 2°C/min, using a dynamic viscoelasticity measuring apparatus. When two or more loss modulus peaks appear, it represents the peak top temperature of the highest peak. The method of preparing the measuring sample is not particularly restricted, but from the viewpoint of eliminating the effect of molding strain it is preferred to use a strip cut out from a hot press molded article, the size (width or thickness) of the cut out strip preferably being as small as possible, from the viewpoint of heat conduction.

Examples of preferred polyamide-based resins for the polyamide resin (A) include, but are not limited to, polyamide 6, polyamide 11 and polyamide 12 obtained by polycondensation reaction of lactams, or polyamide 6,6, polyamide 6,10, polyamide 6,11, polyamide 6,12, polyamide 6,T, polyamide 6,1, polyamide 9,T, polyamide 10,T, polyamide 2M5,T, polyamide MXD,6, polyamide 6,C or polyamide 2M5,C obtained as polymers of diamines such as 1,6-hexanediamine, 2-methyl-1,5-pentanediamine, 1,7-heptanediamine, 2-methyl-1-6-hexanediamine, 1,8-octanediamine, 2-methyl-1,7-heptanediamine, 1,9-nonanediamine, 2-methyl-1,8-octanediamine, 1,10-decanediamine, 1,11-undecanediamine, 1,12-dodecanediamine and m-xylylenediamine, and dicarboxylic acids such as butanedioic acid, pentanedioic acid, hexanedioic acid, heptanedioic acid, octanedioic acid, nonanedioic acid, decanedioic acid, benzene-1,2-dicarboxylic acid, benzene-1,3-dicarboxylic acid, benzene-1,4-dicarboxylic acid, cyclohexane-1,3-dicarboxylic acid and cyclohexane-1,4-dicarboxylic acid, as well as copolymers obtained by copolymerizing two or more of the foregoing (examples of which include polyamide 6,T/6,I). From the viewpoint of inhibiting thermal decomposition of the cellulose nanofibers (B) during molding, it is more preferred to use aliphatic polyamides such as polyamide 6, polyamide 11, polyamide 12, polyamide 6,6, polyamide 6,10, polyamide 6,11 and polyamide 6,12, or amorphous aromatic polyamides such as polyamide 6,1, or alicyclic polyamides such as polyamide 6,C and polyamide 2M5,C, or copolymers obtained by copolymerizing two or more of the foregoing (an example of which is polyamide 6,6/6,1), and it is even more preferred to use polyamide 6,6, polyamide 6, polyamide 6,1 or polyamide 6,10, or a copolymer obtained by copolymerizing two or more of these. From the viewpoint of reducing exposure of the cellulose nanofibers (B) to the surface of the molded article due to a slowed crystallization rate of the polyamide resin (A) in the polyamide resin molded body, and of improving the sliding property of the molded body, it is most preferred to use a copolymer of two or more selected from among polyamide 6,6, polyamide 6, polyamide 6,1 and polyamide 6,10 (an example of which is polyamide 6,6/6,1), or a mixture thereof (an example of which is a mixture of polyamide 6,6 and polyamide 6,1). When the cellulose nanofibers (B) are exposed to the surface of a molded article, the cellulose nanofibers (B) will tend to drop off easily when sliding against the counterpart material, and deteriorating wear properties.

There are no particular restrictions on the terminal carboxyl group concentration of the polyamide resin (A), but the lower limit is preferably 20 $\mu$mol/g and more preferably 30 $\mu$mol/g. The upper limit for the terminal carboxyl group concentration is preferably 150 $\mu$mol/g, more preferably 100 $\mu$mol/g and even more preferably 80 $\mu$mol/g.

In the polyamide resin, the ratio of carboxy-terminal groups with respect to the total terminal groups ([COOH]/[total terminal groups]) is more preferably 0.30 to 0.95. The lower limit for the carboxy-terminal group ratio is more preferably 0.35, yet more preferably 0.40 and most preferably 0.45. The upper limit for the carboxy-terminal group ratio is more preferably 0.90, even more preferably 0.85 and most preferably 0.80. The carboxy-terminal group ratio is preferably 0.30 or more from the viewpoint of dispersibility of the cellulose nanofibers (B) in the composition, and it is preferably no greater than 0.95 from the viewpoint of the color tone of the obtained composition.

The method used to adjust the terminal group concentration of the polyamide resin (A) may be a publicly known method. For example, the method may be addition of a terminal group adjuster that reacts with the terminal groups (specifically terminal amino groups or terminal carboxyl groups), such as a diamine compound, monoamine compound, dicarboxylic acid compound, monocarboxylic acid compound, acid anhydride, monoisocyanate, monoacid halide, monoester or monoalcohol, to the polymerization solution, so as to result in the prescribed terminal group concentration during polymerization of the polyamide.

Examples of terminal group adjusters that react with terminal amino groups include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid and isobutyric acid; alicyclic monocarboxylic acids such as cyclohexanecarboxylic acid; aromatic monocarboxylic acids such as benzoic acid, toluic acid, $\alpha$-naphthalenecarboxylic acid, $\beta$-naphthalenecarboxylic acid, methylnaphthalenecarboxylic acid and phenylacetic acid; and mixtures of any selected from among the foregoing. Among these, from the viewpoint of reactivity, stability of capped ends and cost, one or more terminal group adjusters selected from the group consisting of acetic acid, propionic acid, butyric acid, valeric acid, caproic acid, caprylic acid, lauric acid, tridecanoic acid, myristic acid, palmitic acid, stearic acid and benzoic acid are preferred, with acetic acid being most preferred.

Examples of terminal group adjusters that react with terminal carboxyl groups include aliphatic monoamines such as methylamine, ethylamine, propylamine, butylamine, hexylamine, octylamine, decylamine, stearylamine, dimethylamine, diethylamine, dipropylamine and dibutylamine; alicyclic monoamines such as cyclohexylamine and dicyclohexylamine; aromatic monoamines such as aniline, toluidine, diphenylamine and naphthylamine; and any mixtures of the foregoing. Among these, from the viewpoint of reactivity, boiling point, capped end stability and cost, it is preferred to use one or more terminal group adjusters selected from the group consisting of butylamine, hexylamine, octylamine, decylamine, stearylamine, cyclohexylamine and aniline.

The concentration of the amino terminal groups and carboxy-terminal groups is preferably determined from the integral of the characteristic signal corresponding to each terminal group, according to $^1$H-NMR, from the viewpoint of precision and convenience. The recommended method for determining the terminal group concentration is, specifically, the method described in Japanese Unexamined Patent Publication HEI No. 7-228775. When this method is used, heavy trifluoroacetic acid is useful as the measuring solvent. Also, the number of scans in $^1$H-NMR must be at least 300, even with measurement using a device having sufficient resolving power. Alternatively, the terminal group concentration can be measured by a titration method such as described in Japanese Unexamined Patent Publication No. 2003-055549. However, in order to minimize the effects of the mixed additives and lubricant, quantitation is preferably by $^1$H-NMR.

The intrinsic viscosity [$\eta$] of the polyamide resin (A), measured in concentrated sulfuric acid at 30°C, is preferably 0.6 to 2.0 dL/g, more preferably 0.7 to 1.4 dL/g, even more preferably 0.7 to 1.2 dL/g and most preferably 0.7 to 1.0 dL/g. If the aforementioned polyamide resin having intrinsic viscosity in the preferred range or the particularly preferred range is used, it will be possible to provide an effect of drastically increasing the flow property of the resin composition in the die during injection molding, and improving the outer appearance of molded pieces.

Throughout the present disclosure, "intrinsic viscosity" is synonymous with the viscosity commonly known as the limiting viscosity. The specific method for determining the viscosity is a method in which the $\eta$sp/C of several measuring solvents with different concentrations is measured in 96% concentrated sulfuric acid under temperature conditions of 30°C, the relational expression between each $\eta$sp/C and the concentration (C) is derived, and the concentration is extrapolated to zero. The value extrapolated to zero is the intrinsic viscosity. The details are described in Polymer Process Engineering (Prentice-Hall, Inc. 1994), p. 291-294.

The number of measuring solvents with different concentrations is preferably at least 4, from the viewpoint of precision. The concentrations of the recommended measuring solutions with different viscosities are preferably at least four: 0.05 g/dL, 0.1 g/dL, 0.2 g/dL and 0.4 g/dL.

According to one aspect, the content of the polyamide resin (A) is preferably 60 mass% or more, 70 mass% or more or 80 mass% or more, and preferably 99 mass% or less, 97 mass% or less or 95 mass% or less, in both the polyamide resin composition and the molded resin.

<Cellulose nanofibers (B)>

The cellulose nanofibers (B) are chemically modified cellulose nanofibers having a weight-average molecular weight (Mw) of 100,000 or more and a ratio (Mw/Mn) of weight-average molecular weight (Mw) and number-average molecular weight (Mn) of 6 or less, having an average content of alkali-soluble polysaccharides of 12 mass% or less, and having a crystallinity of 60% or more.

The term "chemically modified cellulose nanofibers" (also referred to throughout the present disclosure as "chemically modified nanofibers") means cellulose nanofibers of which at least some of the hydroxyl groups in the cellulose backbone have been modified. According to a typical aspect, the cellulose as a whole is not chemically modified, and the chemically modified nanofibers retain the crystalline structure of the cellulose nanofibers before chemical modification. The crystalline structure of either or both type I cellulose and type II cellulose can be confirmed by analysis of the chemically modified nanofibers by XRD, for example.

The weight-average molecular weight (Mw) of the chemically modified nanofibers of this embodiment, and the chemically modified nanofibers in the resin composite, is preferably 100,000 or more and more preferably 200,000 or more. The ratio (Mw/Mn) of the weight-average molecular weight and number-average molecular weight (Mn) is 6 or less and preferably 5.4 or less. A higher weight-average molecular weight means a lower number of terminal groups of the cellulose molecules. Since the ratio (Mw/Mn) of the weight-average molecular weight and number-average molecular weight represents the width of the molecular weight distribution, a smaller Mw/Mn means a lower number of ends of cellulose molecules. Since the ends of the cellulose molecules are origins for thermal decomposition, it is not possible to obtain sufficient heat resistance simply with a high weight-average molecular weight of the cellulose molecules of the cellulose nanofibers, but if the weight-average molecular weight is high and the molecular weight distribution width is also narrow, it will be possible to obtain cellulose nanofibers and a resin composite of cellulose nanofibers and a resin, exhibiting high heat resistance. If the heat resistance of the cellulose nanofibers is not sufficient, a large amount of decomposition gas will be generated during melt kneading with the polyamide resin, which will interfere with uniform dispersion of the cellulose nanofibers in the polyamide resin and can lead to carbonization and/or yellowing of the cellulose. The weight-average molecular weight (Mw) of the chemically modified nanofibers may be 600,000 or less, or 500,000 or less, for example, from the viewpoint of greater availability of the cellulose starting material. The ratio (Mw/Mn) of the weight-average molecular weight and number-average molecular weight (Mn) may be 1.5 or more or 2 or more, from the viewpoint of easier production of the chemically modified nanofibers. The Mw can be controlled to within this range by selecting a cellulose raw material having the corresponding Mw, or by carrying out appropriate physical treatment and/or chemical treatment of the cellulose raw material. The Mw/Mn ratio can also be controlled to within this range by selecting a cellulose raw material having the corresponding Mw/Mn ratio, or by carrying out appropriate physical treatment and/or chemical treatment of the cellulose raw material. Examples of physical treatment for control of both the Mw and Mw/Mn include physical treatment by application of mechanical force, such as dry grinding or wet grinding with a microfluidizer, ball mill or disk mill, for example, or impacting, shearing, sliding or abrasion with a crusher, homomixer, highpressure homogenizer or ultrasonic device, for example, while examples of chemical treatment include digestion, bleaching, acid treatment and regenerated cellulose treatment.

The weight-average molecular weight and the number-average molecular weight of the cellulose referred to here are the values determined after dissolving the cellulose in lithium chloride-added N,N-dimethylacetamide, and then performing gel permeation chromatography with N,N-dimethylacetamide as the solvent.

The degree of polymerization of the chemically modified nanofibers is preferably 100 or more, more preferably 150 or more, even more preferably 200 or more, yet more preferably 300 or more, even yet more preferably 400 or more, and most preferably 450 or more, and preferably 3500 or less, more preferably 3300 or less, even more preferably 3200 or less, yet more preferably 3100 or less and most preferably 3000 or less.

The degree of polymerization of the chemically modified nanofibers is preferably within this range from the viewpoint of processability and mechanical properties. The degree of polymerization should not be too high from the viewpoint of molding processability, and it should not be too low from the viewpoint of mechanical properties.

The degree of polymerization of the chemically modified nanofibers is the mean polymerization degree measured by a reduced relative viscosity method using a copper-ethylenediamine solution, as described in Verification Test (3) of "Japanese Pharmacopeia, 15th Edition Reference Manual (Hirokawa Shoten)".

The method of adjusting the degree of polymerization (mean polymerization degree) or molecular weight of the chemically modified nanofibers may be hydrolysis of the cellulose starting material. Hydrolysis promotes depolymerization of amorphous cellulose inside the cellulose and lowers the mean polymerization degree. Simultaneously, hydrolysis also results in removal of impurities such as hemicellulose and lignin in addition to the aforementioned amorphous cellulose, so that the interior of the fiber material becomes porous.

The method of hydrolysis is not particularly restricted and may be acid hydrolysis, alkali hydrolysis, hot water decomposition, steam explosion, microwave decomposition or the like. Such methods may be used alone or in combinations of two or more. In a method of acid hydrolysis, for example, the cellulose raw material is α-cellulose obtained as pulp from a fibrous plant, which is dispersed in an aqueous medium, and then a suitable amount of a proton acid, carboxylic acid, Lewis acid, heteropolyacid or the like is added to the dispersion and the mixture is heated while stirring, thereby allowing easy control of the mean polymerization degree. The reaction conditions such as temperature, pressure and time will differ depending on the type of cellulose, the cellulose concentration, the acid type and the acid concentration, and they are appropriately adjusted so as to obtain the desired mean polymerization degree. For example, a water-soluble mineral acid solution at up to 2 mass% may be used for treatment of cellulose for 10 minutes or longer under conditions of 100°C or more under pressure. Under such conditions, the catalyst component, such as an acid, penetrates to the cellulose interior and hydrolysis is promoted, allowing a lower amount of catalyst component usage and easier subsequent refining. During hydrolysis, the dispersion of the cellulose material may contain, in addition to water, also a small amount of an organic solvent in a range that does not interfere with the effect of the invention.

The average content of alkali-soluble polysaccharides in the chemically modified nanofibers is 12 mass% or less, preferably 11 mass% or less and more preferably 8 mass% or less, from the viewpoint of reducing thermal decomposition gas generation during melt kneading with the polyamide resin. The term "alkali-soluble polysaccharide", as used herein, also encompasses β-cellulose and γ-cellulose, in addition to hemicellulose. Alkali-soluble polysaccharides are understood by those skilled in the art to consist of the components that are obtained as the alkali-soluble portion of holocellulose (that is, the components other than α-cellulose in the holocellulose), upon solvent extraction and chlorine treatment of a plant (such as wood). Since the alkali-soluble polysaccharides consist of hydroxyl group-containing polysaccharides with poor heat resistance, which can lead to inconveniences such as decomposition when subjected to heat, yellowing due to heat aging and reduced strength of the cellulose fibers, it is preferred to have a lower alkali-soluble polysaccharide content in the chemically modified nanofibers. The average content of alkali-soluble polysaccharides in the chemically modified nanofibers is most preferably 0 mass%, but it may be 3 mass% or more or 6 mass% or more from the viewpoint of easy availability of the cellulose raw material.

Since the modifying agent used for chemical modification of the cellulose nanofibers is consumed by secondary reaction with the alkali-soluble polysaccharide, and secondary reaction products remain in the cellulose nanofibers after chemical modification, a lower amount of alkali-soluble polysaccharide in the cellulose starting material is preferred. From this viewpoint, the average content of alkali-soluble polysaccharides in the cellulose starting material is preferably 13 mass% or less, more preferably 12 mass% or less, even more preferably 11 mass% or less and most preferably 8 mass% or less. The average content of alkali-soluble polysaccharides in the cellulose starting material is most preferably 0 mass%, but it may be 3 mass% or more or 6 mass% or more from the viewpoint of easier availability of the cellulose starting material.

The average content of alkali-soluble polysaccharides can be determined by a method described in non-patent literature (Mokushitsu Kagaku Jikken Manual, ed. The Japan Wood Research Society, pp.92-97, 2000), subtracting the $\alpha$-cellulose content from the holocellulose content (Wise method). In the technical field this method is considered to be a method of measuring hemicellulose content. The average content of alkali-soluble polysaccharides in the chemically modified nanofibers will usually be essentially the same as the average content of alkali-soluble polysaccharides in the cellulose raw material used for production of the chemically modified nanofibers (that is, it may be assumed that there is essentially no selective removal of the alkali-soluble polysaccharides under ordinary conditions for chemical modification (typically weakly acidic to neutral pH)). According to one aspect, the value of the average content of alkali-soluble polysaccharides of the cellulose raw material may be considered to be the average content of alkali-soluble polysaccharides in the chemically modified nanofibers.

According to another aspect, the average content for the acid-insoluble component in the chemically modified nanofibers is preferably 10 mass% or less, 5 mass% or less or 3 mass% or less with respect to 100 mass% of the chemically modified nanofibers, from the viewpoint of avoiding heat resistance reduction and related discoloration of the chemically modified nanofibers. The content may also be 0.1 mass% or more, 0.2 mass% or more or 0.3 mass% or more from the viewpoint of facilitating production of the chemically modified nanofibers.

The average content of the acid-insoluble component is quantified using the Klason method, described in non-patent literature (Mokushitsu Kagaku Jikken Manual, ed. The Japan Wood Research Society, pp.92-97, 2000). In the technical field this method is considered to be a method of measuring lignin content. The sample is stirred in the sulfuric acid solution to dissolve the cellulose and hemicellulose, and then filtered with glass fiber filter paper, and the obtained residue is used as the acid-insoluble component. The acid-insoluble component content is calculated from the mass of the acid-insoluble component, and the average of the acid-insoluble component content calculated for three samples is recorded as the average content of the acid-insoluble component.

The number-average fiber diameter of the chemically modified nanofibers in the polyamide resin molded body is preferably 10 nm or more and less than 1 $\mu$m, more preferably 20 nm to 300 nm and most preferably 50 nm to 300 nm, according to one aspect, from the viewpoint of heat resistance and mechanical properties of the resin composite. The length/diameter ratio (L/D ratio) of the chemically modified nanofibers, according to one aspect, is 30 or more, preferably 100 or more, more preferably 200 or more, even more preferably 300 or more and most preferably 500 or more. The L/D ratio may be 5000 or less, for example, from the viewpoint of handleability.

As used herein, the lengths, diameters and L/D ratio of the chemically modified nanofibers can be determined by diluting an aqueous dispersion of the chemically modified nanofibers with a water-soluble solvent (such as water, ethanol or *tert*-butanol) to 0.01 to 0.1 mass%, dispersing under processing conditions of 25,000 rpm $\times$ 5 minutes using a high-shear homogenizer (such as an "ULTRA-TURRAX T18" by IKA Corp.), casting onto mica and air-drying as a measuring sample, and performing measurement using a high-resolution scanning microscope (SEM) or atomic force microscope (AFM). Specifically, with the observation field adjusted to a magnification allowing observation of at least 100 fibers, the lengths (L) and diameters (D) of 100 randomly selected fibers are measured and the ratio (L/D) is calculated. The number-average value for the length (L), the number-average value for the diameter (D) and the number-average value for the ratio (L/D) of the chemically modified nanofibers are calculated.

The length, diameter and L/D ratio of the chemically modified nanofibers in the resin composite can be confirmed by measurement according to the measuring method described above, using the solid resin composite as the measuring sample. Alternatively, the length, diameter and L/D ratio of the chemically modified nanofibers in the resin composite can be determined by dissolving the resin components of the resin composite in an organic or inorganic solvent that is able to dissolve the resin components of the resin composite, separating the chemically modified nanofibers, adequately rinsing them with the solvent, replacing the solvent with a water-soluble solvent (such as water, ethanol or *tert*-butanol), adjusting to a 0.01 to 0.1 mass% dispersion, and re-dispersing with a high-shear homogenizer (for example, an "ULTRA-TURRAX T18" by IKA Corp.). The re-dispersion may be cast onto mica and air-dried as a measuring sample, and confirmation made by measurement using the measuring methods described above. One hundred of the chemically modified nanofibers are randomly selected for the measurement.

The thermal decomposition initiation temperature (Td) of the chemically modified nanofibers is preferably 270°C or more, more preferably 275°C or more, even more preferably 280°C or more and most preferably 285°C or more, according to one aspect, from the viewpoint of heat resistance and mechanical strength desired for automotive applications. While a higher thermal decomposition start temperature is preferred, it is also no higher than 320°C or no higher than 300°C from the viewpoint of ease of production of the chemically modified nanofibers.

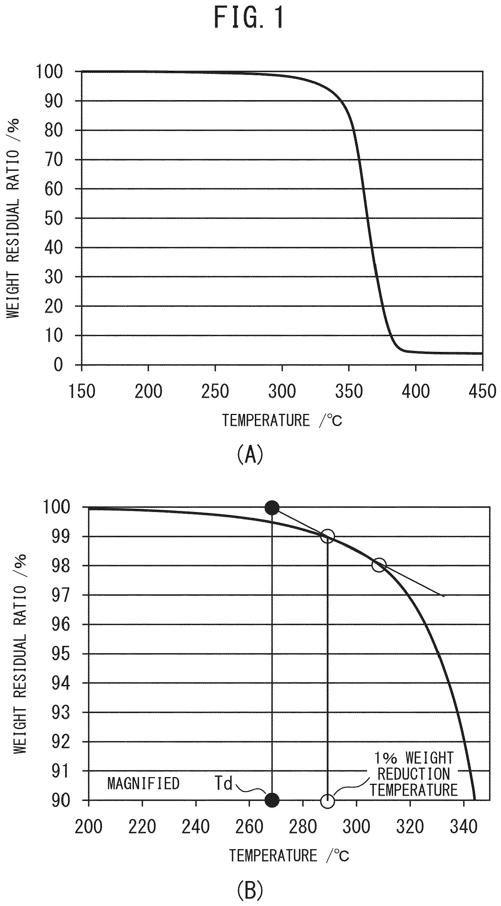

As used herein, the "thermal decomposition starting temperature (Td)" is the value determined from a graph of thermogravimetry (TG) analysis where the abscissa is temperature and the ordinate is weight residual ratio%, as shown in the diagram of Fig. 1 (Fig. 1(B) shows a magnified view of Fig. 1(A)). Starting from the weight of chemically modified nanofibers at 150°C (with almost no moisture removed) (a weight reduction of 0 wt%) and rising the temperature, a straight line is obtained running through the temperature at 1 wt% weight reduction and the temperature at 2 wt% weight reduction. The temperature at the point of intersection between this straight line and a horizontal (baseline) running through the origin at weight reduction 0 wt%, is defined as the thermal decomposition starting temperature (Td).

The 1% weight reduction temperature is the temperature at 1 wt% weight reduction with the 150°C weight as the origin, after continuous temperature rise by the method for the thermal decomposition initiation temperature (Td) described above.

The 250°C weight reduction rate of the chemically modified nanofibers is the weight reduction rate after the chemically modified nanofibers have been kept for 2 hours at 250°C under a nitrogen flow, in thermogravimetry (TG) analysis.

According to one aspect, the chemically modified nanofibers of this embodiment have a crystallinity of 60% or more. If the crystallinity is within this range, the mechanical properties of the chemically modified nanofibers themselves (especially the strength and dimensional stability) will be high, tending to result in high strength and dimensional stability of the resin composite comprising the chemically modified nanofibers dispersed in the resin. High crystallinity means fewer amorphous sections, and therefore a high crystallinity is also preferred from the viewpoint of heat resistance, considering that amorphous sections can act as origins of deterioration.

The aforementioned alkali-soluble polysaccharides and acid-insoluble components are present between plant-derived cellulose microfibrils and between microfibril bundles. Hemicellulose, for example, is known to hydrogen bond with cellulose, acting to link microfibrils together, while lignin is known to covalently bond with hemicellulose in plant cell walls. A large residue of impurities such as lignin in the chemically modified nanofibers may result in discoloration by heating during working, and therefore the crystallinity of the chemically modified nanofibers is preferably within the ranges specified above from the viewpoint of reduce discoloration of the resin composite during extrusion or during molding.

The crystallinity of the chemically modified nanofibers of this embodiment is preferably 65% or more, more preferably 70% or more and most preferably 80% or more. Since a higher crystallinity for the chemically modified nanofibers tends to be preferable the upper limit is not particularly restricted, but from the viewpoint of productivity it is preferably an upper limit of 99%.

When the cellulose is type I cellulose crystals (derived from natural cellulose), the crystallinity is that determined by the following formula, from the diffraction pattern (2θ/deg. = 10 to 30) obtained by measurement of the sample by wide-angle X-ray diffraction, based on the Segal method.

$$\text{Crystallinity (\%)} = ([\text{Diffraction intensity from (200) plane with } 2\theta/\text{deg.} = 22.5] - [\text{diffraction intensity from amorphous matter with } 2\theta/\text{deg.} = 18])/[\text{diffraction intensity from (200) plane with } 2\theta/\text{deg.} = 22.5] \times 100$$

When the cellulose is type II cellulose crystals (derived from regenerated cellulose), the crystallinity is determined by the following formula, from the absolute peak intensity h0 at 2θ = 12.6° attributed to the (110) plane peak of the type II cellulose crystal, and the peak intensity h1 from the baseline for the plane spacing, in wide-angle X-ray diffraction.

$$\text{Degree of crystallinity (\%)} = h1/h0 \times 100$$

As the crystal forms of cellulose, type I, type II, type III and type IV are known, among them, type I and type II are widely used, and type III and type IV are not commonly used on an industrial scale, although they have been obtained on a laboratory scale. The chemically modified nanofibers have relatively high structural mobility, and by dispersing the chemically modified fine fibers in the resin, the coefficient of linear thermal expansion is lower, and the strength and elongation during tensile or bending deformation are better. From the above, a chemically modified fine fiber containing cellulose type I crystal or cellulose type II crystal is preferable, and more preferably the chemically modified nanofibers contain cellulose type I crystal and have a crystallinity of 60% or more.

The chemically modified nanofibers of this embodiment have the hydroxyl groups of the cellulose molecules on the surface of the cellulose nanofibers chemically modified by a cellulose modifying agent. The chemical modification is preferably esterification and more preferably acetylation.

The chemically modified nanofibers of this embodiment, and their production method, as well as the resin composite and its production method, will now be described.

The cellulose to be used as the raw material for the chemically modified nanofibers may be natural cellulose or regenerated cellulose, such as wood pulp obtained from broadleaf trees or conifers, or refined pulp from non-wood species (i.e. nonwood pulp). Nonwood pulp that is used may be cotton pulp containing cotton linter pulp (for example, refining linter), hemp pulp, bagasse pulp, kenaf pulp, bamboo pulp or straw pulp. Cotton pulp, hemp pulp, bagasse pulp, kenaf pulp, bamboo pulp and straw pulp are the refined pulp obtained from the respective starting materials of cotton lint, cotton linter, hemp abaca (usually from Ecuador or the Philippines), sisal, bagasse, kenaf, bamboo and straw, by refining steps such as delignification by digestion treatment, and bleaching steps. Natural cellulose may be cellulose fiber aggregates obtained from sources such as animals (such as sea squirt), algae or microbes (such as acetic acid bacteria), or microbial products. Regenerated cellulose for use may be cut yarn of regenerated cellulose fibers (such as viscose, cupra and Tencel), cut yarn of cellulose derivative fibers, and superfine yarn of regenerated cellulose or cellulose derivatives, obtained by electrospinning methods.

Wood pulp, and refined pulp from non-wood sources (such as nonwood pulp) contain alkali-soluble polysaccharides (such as hemicellulose) and sulfuric acid-insoluble components (such as lignin), and therefore it is preferred to reduce the alkali-soluble polysaccharide and sulfuric acid-insoluble components by carrying out refining steps such as delignification by digestion processing, and bleaching steps. However, since refining steps such as delignification by digestion processing, and bleaching steps, also cut the molecular chains of cellulose, altering its weight-average molecular weight and number-average molecular weight, it is important for the refining steps and bleaching steps for the cellulose starting material to be controlled so that the weight-average molecular weight and the weight-average molecular weight/number-average molecular weight ratio of the cellulose do not deviate from the proper ranges.

Since refining steps such as delignification by digestion processing and bleaching steps lower the molecular weight of the cellulose molecules, this raises the concern that these steps may lead to low molecularization of the cellulose, and degeneration of the cellulose raw material which increases the abundance ratio of the alkali-soluble portion. Since the alkali-soluble portion has poor heat resistance, refining and bleaching of the cellulose raw material is preferably controlled so that the amount of alkali-soluble components in the cellulose raw material is less than a certain value.

Using cellulose with a purity ($\alpha$-cellulose content) of 85 mass% or more, as the raw material for the cellulose type I crystal, is preferred from the viewpoint of the production efficiency and refining efficiency of the chemically modified nanofibers (that is, the purity of the chemically modified nanofibers), and the physical properties when composited with a resin. The cellulose purity is more preferably 90 mass% or more and even more preferably 95 mass% or more.

The cellulose purity can be determined by a method for measuring $\alpha$-cellulose content described in non-patent literature (Mokushitsu Kagaku Jikken Manual, ed. The Japan Wood Research Society, pp.92-97, 2000).

The raw material for the cellulose type II crystal may have a low cellulose purity when determined using a method of measuring the $\alpha$-cellulose content (the $\alpha$-cellulose content measuring method is a method originally developed for analysis of cellulose type I crystal raw materials such as wood). However, since a raw material for cellulose type II crystal is a product processed and produced using cellulose type I crystal as raw material (such as viscose rayon, cupra, lyocell or mercerized cellulose), the original cellulose purity is high. The cellulose type II crystal raw material is therefore suitable as a starting material for the cellulose nanofibers of the invention even with a cellulose purity of less than 85 mass%.

The cellulose modifying agent used may be a compound that reacts with the hydroxyl groups of cellulose, and it may be an esterifying agent, an etherifying agent or a silylating agent. According to a preferred aspect, the chemical modification is acylation using an esterifying agent. Preferred esterifying agents are acid halides, acid anhydrides, vinyl carboxylate esters and carboxylic acids.

The acid halide may be at least one selected from the group consisting of compounds represented by the following formula (2).

$$R^1\text{-}C(=O)\text{-}X \quad (2)$$

(In the formula, R1 represents an alkyl group of 1 to 24 carbon atoms, an alkenyl group of 2 to 24 carbon atoms, a cycloalkyl group of 3 to 24 carbon atoms or an aryl group of 6 to 24 carbon atoms, and X is Cl, Br or I.)

Specific examples of acid halides include acetyl chloride, acetyl bromide, acetyl iodide, propionyl chloride, propionyl bromide, propionyl iodide, butyryl chloride, butyryl bromide, butyryl iodide, benzoyl chloride, benzoyl bromide and benzoyl iodide, with no limitation to these. Acid chlorides are preferably used among these from the viewpoint of reactivity and handleability. In the reaction of the acid halide, one or more alkaline compounds may be added for the purpose of neutralize the acidic substance as a by-products, while simultaneously acting as a catalyst. Specific examples of alkaline compounds include, but are not limited to: tertiary amine compounds such as triethylamine and trimethylamine; and nitrogen-containing aromatic compounds such as pyridine and dimethylaminopyridine.

Any appropriate acid anhydride can be used as the acid anhydride. Examples include:

saturated aliphatic monocarboxylic anhydrides of acetic acid, propionic acid, (iso)butyric acid and valeric acid;
unsaturated aliphatic monocarboxylic anhydrides of (meth)acrylic acid and oleic acid;

alicyclic monocarboxylic anhydrides of cyclohexanecarboxylic acid and tetrahydrobenzoic acid;

aromatic monocarboxylic anhydrides of benzoic acid and 4-methylbenzoic acid;

dibasic carboxylic anhydrides, for example: saturated aliphatic dicarboxylic acid anhydrides such as succinic anhydride and adipic anhydride, unsaturated aliphatic dicarboxylic anhydrides such as maleic anhydride and itaconic anhydride, alicyclic dicarboxylic acid anhydrides such as 1-cyclohexene-1,2-dicarboxylic anhydride, hexahydrophthalic anhydride and methyltetrahydrophthalic anhydride, and aromatic dicarboxylic anhydrides such as phthalic anhydride and naphthalic anhydride; and

tribasic or greater polybasic carboxylic anhydrides, for example: polycarboxylic acid (anhydrides) such as trimellitic anhydride and pyromellitic anhydride.

The catalyst for reaction of an acid anhydride may be one or more types of an acidic compound such as sulfuric acid, hydrochloric acid or phosphoric acid, or a Lewis acid (such as a Lewis acid compound represented by MYn where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.

Preferred vinyl carboxylate esters are vinyl carboxylate esters represented by the following formula (3):

$$R\text{-COO-CH=CH}_2: \qquad \text{formula (3)}$$

{where R is an alkyl group of 1 to 24 carbon atoms, an alkenyl group of 2 to 24 carbon atoms, a cycloalkyl group of 3 to 16 carbon atoms or an aryl group of 6 to 24 carbon atoms}. Vinyl carboxylate esters are more preferably one or more selected from the group consisting of vinyl acetate, vinyl propionate, vinyl butyrate, vinyl caproate, vinyl cyclohexanecarboxylate, vinyl caprylate, vinyl caprate, vinyl laurate, vinyl myristate, vinyl palmitate, vinyl stearate, vinyl pivalate, vinyl octylate, divinyl adipate, vinyl methacrylate, vinyl crotonate, vinyl pivalate, vinyl octylate, vinyl benzoate and vinyl cinnamate. For esterification reaction with a vinyl carboxylate ester, one or more catalysts selected from the group consisting of alkali metal hydroxides, alkaline earth metal hydroxides, alkali metal carbonates, alkaline earth metal carbonates, alkali metal hydrogencarbonate salts, primary to tertiary amines, quaternary ammonium salts, imidazoles and their derivatives, pyridines and their derivatives, and alkoxides, may be added.

Examples of the Alkali metal hydroxides and alkaline earth metal hydroxides include sodium hydroxide, potassium hydroxide, lithium hydroxide, calcium hydroxide and barium hydroxide. Alkali metal carbonates, alkaline earth metal carbonates and alkali metal hydrogencarbonate salts include lithium carbonate, sodium carbonate, potassium carbonate, cesium carbonate, magnesium carbonate, calcium carbonate, barium carbonate, lithium hydrogencarbonate, sodium hydrogencarbonate and potassium hydrogencarbonate cesium hydrogencarbonate.

The primary to tertiary amines are primary amines, secondary amines and tertiary amines, specific examples of which include ethylenediamine, diethylamine, proline, N,N,N',N'-tetramethylethylenediamine, N,N,N',N'-tetramethyl-1,3-propanediamine, N,N,N',N'-tetramethyl-1,6-hexanediamine, tris(3-dimethylaminopropyl)amine, N,N-dimethylcyclohexylamine and triethylamine.

Examples of the Imidazole and its derivatives include 1-methylimidazole, 3-aminopropylimidazole and carbonyldiimidazole.

Examples of the Pyridine and its derivatives include N,N-dimethyl-4-aminopyridine and picoline.

Examples of the Alkoxides include sodium methoxide, sodium ethoxide and potassium-t-butoxide.

The Carboxylic acids include one or more selected from the group consisting of compounds represented by the following formula (4).

$$R\text{-COOH:} \qquad (4)$$

(In the formula, R represents an alkyl group of 1 to 16 carbon atoms, an alkenyl group of 2 to 16 carbon atoms, a cycloalkyl group of 3 to 16 carbon atoms or an aryl group of 6 to 16 carbon atoms.)

Specific examples of carboxylic acids include one or more selected from the group consisting of acetic acid, propionic acid, butyric acid, caproic acid, cyclohexanecarboxylic acid, caprylic acid, capric acid, lauric acid, myristic acid, palmitic acid, stearic acid, pivalic acid, methacrylic acid, crotonic acid, pivalic acid, octylic acid, benzoic acid and cinnamic acid.

Preferred among these carboxylic acids are one or more selected from the group consisting of acetic acid, propionic acid and butyric acid, and especially acetic acid, from the viewpoint of reaction efficiency.

The catalyst for reaction of a carboxylic acid may be one or more types of an acidic compound such as sulfuric acid, hydrochloric acid or phosphoric acid, or a Lewis acid (such as a Lewis acid compound represented by MYn where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.

Particularly preferred among these esterification reactants are one or more selected from the group consisting of acetic anhydride, propionic anhydride, butyric anhydride, vinyl acetate, vinyl propionate, vinyl butyrate and acetic acid, among which acetic anhydride and vinyl acetate are especially preferred from the viewpoint of reaction efficiency.

The method for reducing the maximum fiber diameter in order to convert the natural cellulose raw material to cellulose nanofibers is not particularly restricted, but it is preferred for the defibrating treatment conditions (creation of the shear field or the size of the shear field) to be as efficient as possible. In particular, a defibrating solution containing an aprotic solvent is impregnated into a cellulose raw material (for example, a cellulose raw material with a cellulose purity of 85 mass% or more), and swelling of the cellulose is induced in a short period of time, while merely applying the energy of a small degree of stirring and shear for micronization of the cellulose. Also, a cellulose modifying agent may be added immediately after defibrating, to obtain chemically modified nanofibers. This method is preferred from the viewpoint of production efficiency and refining efficiency (i.e. high purity of the chemically modified nanofibers), as well as the physical properties of the resin composite.

Examples of the aprotic solvent may be an alkyl sulfoxide, an alkylamide or pyrrolidone, . Any of these solvents may be used alone or in combinations of two or more.

Examples of alkyl sulfoxides include di-C1-4 alkyl sulfoxides such as dimethyl sulfoxide (DMSO), methylethyl sulfoxide and diethyl sulfoxide.

Examples of alkylamides include N,N-di-C1-4 alkylformamides such as N,N-dimethylformamide (DMF) and N,N-diethylformamide; and N,N-di-C1-4 alkylacetamides such as N,N-dimethylacetamide (DMAc) and N,N-diethylacetamide.

Examples of pyrrolidones include pyrrolidones such as 2-pyrrolidone and 3-pyrrolidone; and N-C1-4 alkylpyrrolidones such as N-methyl-2-pyrrolidone (NMP).

Any of these aprotic solvents may be used alone or in combinations of two or more. Among these aprotic solvents using DMSO (29.8), DMF (26.6), DMAC (27.8) and NMP (27.3) (the numerals in parentheses indicating the donor numbers), and especially DMSO, allow chemically modified nanofibers with a high thermal decomposition starting temperature to be more efficiently produced. While the action mechanism is not completely understood, it is theorized to be due to homogeneous microswelling of the fiber raw material in the aprotic solvent.

When the raw material for the chemically modified nanofibers swells in the aprotic solvent, the aprotic solvent rapidly permeates the fibrils composing the raw material and swells them, such that the microfibrils are converted to a fine defibrated state. After creating this state, it is assumed that chemical modification proceeds homogeneously throughout the fine fiber by performing chemical modification, and as a result, high heat resistance is obtained. Furthermore, this microfibrillated chemically modified nanofibers maintain a high crystallinity, and when composited with resins , it has high mechanical properties and sliding properties and excellent dimensional stability (especially a very low coefficient of linear thermal expansion) ..

The micronized (defibrated) and chemically modified nanofibers may be prepared using an apparatus that applies impact shearing, such as a planetary ball mill or bead mill, an apparatus that applies a rotating shear field that induces fibrillation of cellulose, such as a disc refiner or grinder, or an apparatus that can carry out functions of kneading, agitation and dispersion in a highly efficient manner, such as any of various types of kneaders or planetary mixers, or a rotary homogenizing mixer, with no limitation to these.

Since powerful mechanical pulverizing with a ball mill or the like can result in mechanochemical reaction typical of solid states, it may be impossible to avoid cleaving of the molecular chains of the cellulose, or destruction of the crystalline structure, or dissolution of the cellulose. This can result in undesired effects such as lower weight-average molecular weight of the obtained fiber cellulose molecules, increase or reduction in the ratio of weight-average molecular weight to number-average molecular weight, a lower degree of crystallinity, or lower yield. When using powerful mechanical pulverizing with a ball mill or the like, therefore, the weight-average molecular weight of the cellulose molecules, the ratio of weight-average molecular weight to number-average molecular weight and the degree of crystallinity are preferably controlled so that they do not deviate from their suitable ranges.

A slurry of the chemically modified nanofibers may also be dried under controlled drying conditions to form a dry solid. When the dry solid is to contain the chemically modified nanofibers with additional components, the additional components may be added before, during and/or after drying the slurry. The dispersing agent (C) may be added before drying and evenly dispersed with the chemically modified nanofibers, which is preferred from the viewpoint of inhibiting aggregation of the nanofibers during drying. A mixer may be used for drying, but a mechanical agitation mixing granulator is preferred since it allows drying to be carried out at a relatively high shear rate. According to one aspect, the drying is carried out in a batch process using a mechanical agitation mixing granulator. The mechanical agitation mixing granulator may be a commercial product, and an example is a flow mixer type, which may be an apparatus comprising a stirring blade and chopper blade in a mixer body such as a Loedige mixer (by Matsubo Corp., for example) or a high-speed vacuum dryer (by EarthTechnica Co., Ltd., for example), or an apparatus comprising multiple stirring blades (typically an upper and lower blade) in a mixer body such as planetary mixer (by Asada Iron Works Co., Ltd., for example) or a Henschel mixer (FM mixer) (by Nippon Coke & Engineering Co., Ltd., for example). By controlling the drying conditions, and especially the shear rate, drying speed, drying temperature and/or pressure (pressure reduction), it is possible to inhibit aggregation of the chemically modified nanofibers during drying.

The average degree of chemical modification of the chemically modified nanofibers of this embodiment is represented as the average degree of substitution of hydroxyl groups (the average number of hydroxyl groups replaced per glucose molecule, as the basic structural unit of cellulose, or "DS"). According to one aspect, the average degree of substitution of hydroxyl groups (DS) of the chemically modified nanofibers is preferably 0.3 to 1.2 and more preferably 0.5 to 1.1. While a higher average degree of substitution is preferred from the viewpoint of heat resistance, an excessively high average degree of substitution leads to a lower crystallinity of the nanofibers and reduced dynamic strength of the nanofibers, and causes deposition of cellulose with a high average degree of substitution onto the fiber surfaces which acts as an adhesive to promote aggregation of the fibers, and this can potentially lower the physical properties and dimensional stability of the molded article. An average degree of substitution of 0.3 or more will have an effect of more uniformly dispersing the chemically modified nanofibers in the polyamide resin, while also slowing the crystallization rate of the polyamide resin in the polyamide resin molded body and forming more homogeneous and micronized spherocrystals, which will thus inhibit formation of large aggregated masses of the chemically modified nanofibers while limiting exposure of the chemically modified nanofibers to the molded article surface, helping to provide a molded article with high dimensional stability, high elasticity, a low friction coefficient and low wear.

In the attenuated total reflective infrared absorption spectrum of the chemically modified nanofibers, the peak locations of the absorption bands vary depending on the type of chemically modified groups. Based on variation in the peak locations it is possible to determine on which absorption bands the peaks are based, allowing identification of modifying groups. It is also possible to calculate the modification rate from the peak intensity ratio of peaks attributable to the modifying groups and peaks attributable to the cellulose backbone.

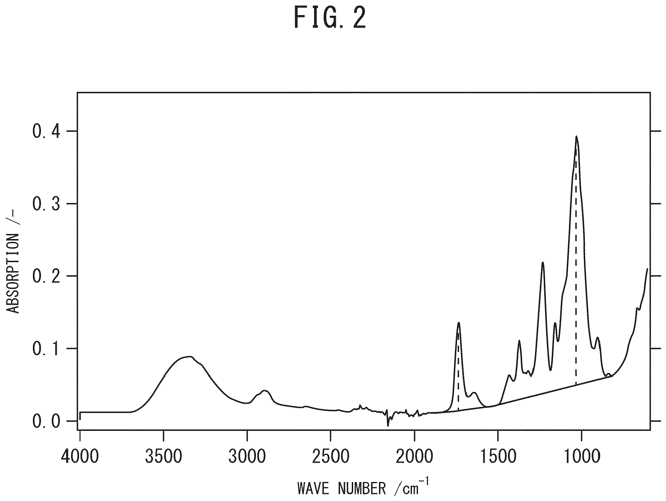

When the modifying group is an acyl group, the degree of acyl substitution (DS) can be calculated based on the peak intensity ratio between the acyl group-derived peak and the cellulose backbone-derived peak, in the reflective infrared absorption spectrum of the esterified cellulose nanofibers. The peak of the absorption band for C=O based on acyl groups appears at 1730 cm$^{-1}$, while the peak of the absorption band for C-O based on the cellulose backbone chain appears at 1030 cm$^{-1}$ (see Fig. 2). The DS of esterified cellulose nanofibers can be calculated using:

$$\text{Degree of substitution DS} = 4.13 \times \text{IR index } (1030),$$

from a calibration curve derived from a correlation graph drawn between DS obtained from solid NMR measurement of the esterified cellulose nanofibers described below, and the modification rate (IR index 1030), defined by the ratio of the peak intensity of the absorption band for C=O based on acyl groups with respect to the peak intensity of the absorption band for C-O of the cellulose backbone chain.

The method of determining DS of the esterified cellulose nanofibers by solid NMR may be $^{13}$C solid NMR measurement of the freeze-shattered esterified cellulose nanofibers, and calculation of the value by the following formula using the area intensity (Inf) of the signal attributed to one carbon atom of the modifying group, with respect to the total area intensity (Inp) of the signals attributed to C1-C6 carbons of the pyranose rings of cellulose, appearing in the range of 50 ppm to 110 ppm.

$$\text{DS} = (\text{Inf}) \times 6/(\text{Inp})$$

For example, when the modifying group is acetyl, the signal at 23 ppm attributed to -CH$_3$ may be used.

The conditions in the $^{13}$C solid NMR measurement may be as follows, for example.

Apparatus: Bruker Biospin Avance 500WB
Frequency: 125.77 MHz
Measuring method: DD/MAS
Latency time: 75 sec
NMR sample tube: 4 mm$\varphi$
Number of scans: 640 (~14 hr)
MAS: 14,500 Hz
Chemical shift reference: glycine (external reference: 176.03 ppm)

In the chemically modified nanofibers of this embodiment, the coefficient of variation (CV) in the DS non-uniformity ratio (DSs/DSt), defined as the ratio of the degree of modification (DSs) of the fiber surfaces with respect to the degree of modification (DSt) of the fibers as a whole (which has the same definition as the average degree of substitution (DS) explained above), is preferably 50% or less, more preferably 40% or less, even more preferably 30% or less and most preferably 20% or less. A larger value for the DS non-uniformity ratio corresponds to a more non-uniform structure similar to a sheath-core structure (that is, while the fiber surfaces are highly chemically modified, the center sections of the fibers maintain the original largely unmodified cellulose structure), which helps to provide the high tensile strength and dimensional stability of cellulose while improving the heat resistance by chemical modification and the affinity with the resin when used in a resin composite and improving the dimensional stability of the resin composite. A lower coefficient of variation for the DS non-uniformity ratio is preferred because it corresponds to less variation in the physical properties of the resin composite.

The values of DSs and DSt vary depending on the degree of modification of the chemically modified nanofibers, but the preferred range for DSs is 0.2 to 3.0 and more preferably 0.4 to 2.8, for example. The preferred range for DSt is as described above for the acyl substituent (DS). The DS non-uniformity ratio (DSs/DSt) is preferably 1.05 or more, more preferably 1.2 or more and even more preferably 1.5 or more, from the viewpoint of improving the tensile strength and dimensional stability and the heat resistance provided by chemical modification, and also improving affinity with the resin when used in a resin composite and increasing the dimensional stability of the resin composite, while it is also preferably 6 or less, more preferably 4 or less and even more preferably 3 or less, from the viewpoint of facilitating production of the chemically modified nanofibers.

The coefficient of variation for the DS non-uniformity ratio is lowered by a method of chemical modification after defibration of the cellulose raw material to obtain chemically modified cellulose fibers (sequential method), while it is raised by a method of simultaneous defibration and chemical modification of the cellulose raw material (simultaneous method). While the action mechanism for this is not completely understood, it is believed that in the simultaneous method, chemical modification proceeds further with the narrow fibers that are initially formed by defibrating, while reduction in hydrogen bonding between the cellulose microfibrils due to the chemical modification results in further defibration and leads to a larger coefficient of variation of the DS non-uniformity ratio.

The coefficient of variation (CV) of the DS non-uniformity ratio can be obtained by sampling 100 g of the aqueous dispersion of the chemically modified fibers (solid content: ≥10 mass%), using 10 g each of the freeze-shattered substance as measuring samples, calculating the DS non-uniformity ratio from DSt and DSs for the 10 samples, and calculating by the following formula from the standard deviation ($\sigma$) and arithmetic mean ($\mu$) of the DS non-uniformity ratio between the 10 samples.

$$\text{DS Non-uniformity ratio} = \text{DSs/DSt}$$

$$\text{Coefficient of variation (\%)} = \text{standard deviation } \sigma/\text{arithmetic mean } \mu \times 100$$

The method of calculating DSs is as follows. Specifically, powdered esterified cellulose obtained by freeze-pulverizing is placed on a 2.5 mm$\varphi$ dish-shaped sample stand and the surface is pressed flat and measured by X-ray photoelectron spectroscopy (XPS). The XPS spectrum reflects the structural elements and chemically bonded state of the sample surface layer alone (typically about several nanometers). The obtained C1s spectrum is analyzed by peak separation, and calculation is performed by the following formula using the area intensity (Ixf) of the peak attributed to one carbon atom of the modifying group, with respect to the area intensity (Ixp) of the peak attributed to the C2-C6 carbons of the pyranose rings of cellulose (289 eV, C-C bond).

$$\text{DSs} = (\text{Ixf}) \times 5/(\text{Ixp})$$

For example, when the modifying group is acetyl, the C1s spectrum is analyzed by peak separation at 285 eV, 286 eV, 288 eV and 289 eV, and the peak at 289 eV may be used for Ixp while the peak due to acetyl group O-C=O bonds (286 eV) may be used for Ixf.

The conditions for XPS measurement are the following, for example.

Device: VersaProbe II by Ulvac-Phi, Inc.
Excitation source: mono. AlK$\alpha$ 15 kV $\times$ 3.33 mA
Analysis size: ~200 $\mu$m$\varphi$
Photoelectron take-off angle: 45°

Capture range
Narrow scan: C Is, O Is
Pass energy: 23.5 eV

From the viewpoint of mechanical properties, rigidity on heating, dimensional stability and sliding properties, the content of the chemically modified cellulose nanofibers (B) with respect to 100 parts by mass of the polyamide resin (A) is preferably 2 parts by mass or more, more preferably 5 parts by mass or more and even more preferably 10 parts by mass or more, and from the viewpoint of molding processability, it is preferably 100 parts by mass or less, more preferably 60 parts by mass or less and even more preferably 30 parts by mass or less.

According to one aspect, the content of the chemically modified cellulose nanofibers (B) in both the polyamide resin composition and the molded resin is preferably 1 mass% or more, 3 mass% or more or 5 mass% or more, and preferably 40 mass% or less, 30 mass% or less or 20 mass% or less.

<Dispersing agent (C)>

The dispersing agent (C) helps to improve the dispersibility of the cellulose nanofibers (B) in the polyamide resin (A). The dispersing agent (C) may be of a single type or a mixture of two or more types. In the latter case, the property values used herein (such as melting point, molecular weight, HLB value and SP value) are those of the mixture. From the viewpoint of uniformly dispersing the cellulose nanofibers (B) in the polyamide resin (A), slowing the crystallization rate of the polyamide resin (A) and inhibiting exposure of the cellulose nanofibers (B) to the molded article surface, and reducing the friction coefficient and wear rate of the molded article, the melting point of the dispersing agent (C) is 80°C or less and the number-average molecular weight is 1000 to 50,000. The effect of the dispersing agent (C) causes the cellulose nanofibers (B) to be uniformly microdispersed in the polyamide resin (A), also with uniform micronization of the spherocrystals of the polyamide resin (A), and this allows a molded article to be provided that has excellent dimensional stability, high elasticity, a low friction coefficient, low wear and low abrasion. Such a dispersing agent coats the surfaces of the cellulose nanofibers (B) uniformly and performs as a compatibilizer with the polyamide resin (A). If the melting point of the dispersing agent (C) is higher than 80°C, or if the number-average molecular weight is less than 1000 or more than 50,000, then the dispersing agent will not be able to uniformly coat the cellulose nanofibers (B) and it will be difficult to disperse the cellulose nanofibers (B) uniformly in the polyamide resin (A). According to one aspect, the melting point of the dispersing agent (C) is 80°C or less or 70°C or less, and according to another aspect it is -100°C or more or -50°C or more. According to one aspect, the number-average molecular weight of the dispersing agent (C) is 1000 or more or 2000 or more, and according to another aspect it is 50,000 or less or 20,000 or less.

The dispersing agent (C) is preferably a water-soluble polymer from the viewpoint of inhibiting aggregation of the cellulose nanofibers (B). For the purpose of the present disclosure, "water-soluble" means dissolving to 0.1 g or more in 100 g of water at 23°C. The dispersing agent (C) more preferably has a hydrophilic segment and a hydrophobic segment (that is, it is an amphiphilic molecule), from the viewpoint of uniformly dispersing the cellulose nanofibers (B) in the polyamide resin (A). Amphiphilic molecules include those having carbon atoms as the basic backbone, and with a functional group comprising elements selected from among carbon, hydrogen, oxygen, nitrogen, chlorine, sulfur and phosphorus. If the molecule has the aforementioned structure, inorganic compounds with the aforementioned functional groups chemically bonded are also suitable. The hydrophilic segment has good affinity with the cellulose surfaces, while the hydrophobic segment inhibits aggregation between cellulose through the hydrophilic segments, and it is also highly compatible with the polyamide resin (A). Therefore, the hydrophilic segment and hydrophobic segment of the dispersing agent (C) are preferably present in the same molecule.

The HLB value of the dispersing agent (C) is preferably 0.1 or more and less than 8.0. The HLB value is a value representing the balance between hydrophobicity and hydrophilicity of the surfactant, being represented as a value of 1 to 20, with a smaller value indicating stronger hydrophobicity and a higher value indicating stronger hydrophilicity. According to the disclosure, the HLB value is the value determined by the following formula based on the Griffin method. In the following formula, the "sum of formula weights of hydrophilic groups/molecular weight" is the mass% of the hydrophilic group.

$$\text{Formula 1) Griffin method: HLB value} = 20 \times (\text{sum of formula weights of hydrophilic groups/molecular weight})$$

The lower limit for the HLB value of the dispersing agent (C) is preferably 0.1, more preferably 0.2 and most preferably 1, from the viewpoint of easier solubility in water. The upper limit for the HLB value is preferably less than 8, more preferably 7.5 and most preferably 7, from the viewpoint of uniform dispersion of the cellulose nanofibers (B) in the polyamide resin (A).

According to a typical aspect, the hydrophilic segment includes a hydrophilic structure (for example, one or more hydrophilic groups selected from among hydroxyl, carboxy, carbonyl, amino, ammonium, amide and sulfo groups), and it is therefore a portion exhibiting satisfactory affinity with the cellulose nanofibers (B). Examples of hydrophilic segments include polyethylene glycol segments (i.e. segments with multiple oxyethylene units) (PEG block), segments with repeating units containing quaternary ammonium salt structures, polyvinyl alcohol segments, polyvinylpyrrolidone segments, polyacrylic acid segments, carboxyvinyl polymer segments, cationized guar gum segments, hydroxyethyl cellulose segments, methyl cellulose segments, carboxymethyl cellulose segments and polyurethane soft segments (specifically, diol segments). According to a preferred aspect, the hydrophilic segment includes an oxyethylene unit.

Examples of hydrophobic segments include segments having alkylene oxide units of 3 or more carbon atoms (such as PPG blocks), and segments containing any of the following polymer structures:
an acrylic polymer, styrene-based resin, vinyl chloride-based resin, vinylidene chloride-based resin, or polyolefin-based resin, a polycondensate of an organic dicarboxylic acid of 4 to 12 carbon atoms and an organic diamine of 2 to 13 carbon atoms, such as polyhexamethylene adipamide (nylon 6,6), polyhexamethylene azeramide (nylon 6,9), polyhexamethylene sebacamide (nylon 6,10), polyhexamethylene dodecanoamide (nylon 6,12) or polybis(4-aminocyclohexyl)methanedodecane, a polycondensate of $\omega$-amino acid (for example, $\omega$-aminoundecanoic acid) (such as polyundecaneamide (nylon 11)), an amino acid lactam containing a lactam ring-opening polymer, such as the $\varepsilon$-aminocaprolactam ring-opening polymer polycapramide (nylon 6) or the $\varepsilon$-aminolaurolactam ring-opening polymer polylauric lactam (nylon 12), a polymer composed of a diamine and a dicarboxylic acid, or a polyacetal-based resin, polycarbonate-based resin, polyester-based resin, polyphenylene sulfide-based resin, polysulfone-based resin, polyether ketone-based resin, polyimide-based resin, fluorine-based resin, hydrophobic silicone-based resin, melamine-based resin, epoxy-based resin or phenol-based resin.

According to a preferred aspect, the dispersing agent (C) has a PEG block as the hydrophilic group and a PPG block as the hydrophobic group in the molecule.

The dispersing agent (C) may have a graft copolymer structure and/or a block copolymer structure. These structures may exist alone, or two or more may exist in combination. In the case of two or more structures, they may form a polymer alloy. Partial modified forms or terminal modified (acid-modified) forms of these copolymers may also be used.

The structure of the dispersing agent (C) is not particularly restricted, and if the hydrophilic segment is represented as A and the hydrophobic segment as B, it may be an AB block copolymer, ABA block copolymer, BAB block copolymer, ABAB block copolymer, ABABA block copolymer or BABAB copolymer, a 3-branch copolymer containing A and B, a 4-branch copolymer containing A and B, a star-shaped copolymer containing A and B, a monocyclic copolymer containing A and B, a polycyclic copolymer containing A and B, or a semicircular copolymer containing A and B.

The structure of the dispersing agent (C) is preferably an AB block copolymer, an ABA triblock copolymer, a 3-branch copolymer containing A and B or a 4-branch copolymer containing A and B, and more preferably an ABA triblock copolymer, a 3-branch structure (3-branch copolymer containing A and B) or a 4-branch structure (4-branch copolymer containing A and B). The structure of the dispersing agent (C) is preferably a structure as described above in order to ensure good affinity with the cellulose nanofibers (B).

Preferred examples for the dispersing agent (C) include copolymers obtained using one or more from among compounds that provide hydrophilic segments (for example, polyethylene glycol) and compounds that provide hydrophobic segments (for example, polypropylene glycol, poly(tetramethylene ether) glycol (PTMEG) and polybutadienediol) (for example, block copolymers of propylene oxide and ethylene oxide or block copolymers of tetrahydrofuran and ethylene oxide). Such dispersing agents may be used alone or in combinations of two or more. When two or more are used in combination, they may be used as a polymer alloy. A modified copolymer may also be used (for example, modified with one or more compounds selected from among unsaturated carboxylic acids and their acid anhydrides or derivatives).

Among these, from the viewpoint of heat resistance (odor) and mechanical properties, are copolymers of polyethylene glycol and polypropylene glycol, copolymers of polyethylene glycol and poly(tetramethylene ether) glycol (PTMEG), and mixtures thereof, with copolymers of polyethylene glycol and polypropylene glycol being more preferred from the viewpoint of handleability and cost.

According to a typical aspect, the dispersing agent (C) has a cloud point. This is a phenomenon in which increasing the temperature of a transparent or semi-transparent aqueous solution of a nonionic surfactant solution having a polyether chain such as a polyoxyethylene chain as the hydrophilic site, causes the solution to become opaque at a certain temperature (called the cloud point). Specifically, heating the transparent or semi-transparent aqueous solution at low temperature results in rapid reduction in the solubility of the nonionic surfactant around a borderline temperature, causing the previously dissolved surfactant to aggregate and become cloudy, separating from the water. This is thought to occur because high temperature results in loss of hydration force by the nonionic surfactant (the hydrogen bonds between the polyether chains and water are broken, rapidly lowering the solubility in water). The cloud point tends to be lower with longer polyether chains. Since dissolution in water occurs in an arbitrary proportion at temperatures below the cloud point, the cloud point is a reference for the hydrophilicity of the dispersing agent (C).

The cloud point of the dispersing agent (C) can be measured by the following method. A tuning fork vibration viscometer (such as SV-10A by A&D Co., Ltd.) is used for measurement in a temperature range of 0 to 100°C, adjusting the aqueous solution of the dispersing agent (C) to 0.5 mass%, 1.0 mass% and 5 mass%. The cloud point is the part at each concentration exhibiting an inflection point (the point at which the viscosity rise changes, or the aqueous solution becomes clouded).

From the viewpoint of handleability, the lower limit for the cloud point of the dispersing agent (C) is preferably 10°C, more preferably 20°C and most preferably 30°C. The upper limit for the cloud point is not particularly restricted but is preferably 120°C, more preferably 110°C, even more preferably 100°C and most preferably 60°C. In order to ensure good affinity with the cellulose nanofibers (A), the cloud point of the dispersing agent (C) is preferably in the range specified above.

The dispersing agent (C) more preferably has a solubility parameter (SP value) of 7.25 or more. If the dispersing agent (C) has an SP value in this range, the dispersibility of the cellulose nanofibers (B) in the polyamide resin (A) will be improved.

According to a publication by Foders (R.F. Foders: Polymer Engineering & Science, vol. 12(10), p.2359-2370(1974)), the SP value depends on both the cohesive energy density and the molecular weight of the substance, which in turn are believed to depend on the type and number of substituents of the substance, and SP values $(cal/cm^3)^{1/2}$ for the major existing solvents used in the examples described below have been publicly disclosed, as published by Ueda et al. (Toryo no Kenkyu, No.152, Oct. 2010).

The SP value of the dispersing agent (C) can be experimentally determined from the soluble/insoluble boundary obtained when the dispersing agent (C) has been dissolved in different solvents with known SP values. For example, it can be judged based on whether or not total dissolution takes place when 1 mL of the dispersing agent (C) has been dissolved for a period of 1 hour at room temperature while stirring with a stirrer, in various solvents (10 mL) having different SP values. When the dispersing agent (C) is soluble in diethyl ether, for example, the SP value of the dispersing agent (C) is 7.25 or more.

The dispersing agent (C) (especially an amphiphilic molecule) preferably has a boiling point higher than water, and one having a boiling point that is higher than the melting point of the polyamide resin (A) is preferred from the viewpoint of uniformly dispersing the cellulose nanofibers (B) in the polyamide resin during melt kneading. Having a higher boiling point than water means having a boiling point that is higher than the boiling point of water at each pressure on a vapor pressure curve (100°C under 1 atmosphere, for example).

If a dispersing agent (C) having a higher boiling point than water is selected, then in the step of drying the cellulose nanofibers (B) that have been dispersed in water in the presence of the dispersing agent (C) to obtain a preparation of the cellulose nanofibers (B), for example, the water and dispersing agent (C) will be exchanged during the course of water evaporation, causing the dispersing agent (C) to remain on the surfaces of the cellulose nanofibers (B), exhibiting an effect of greatly inhibiting aggregation of the cellulose nanofibers (B).

The method of adding the dispersing agent (C) during preparation of the polyamide resin molded body is not particularly restricted, and the following may be mentioned:

a method of premixing and melt kneading the polyamide resin (A), the cellulose nanofibers (B) and the dispersing agent (C), and then molding the mixture,
a method of adding the dispersing agent (C) to the polyamide resin (A) beforehand, if necessary with pre-kneading, and then adding the cellulose nanofibers (B) and melt kneading and molding the mixture,
a method of premixing the cellulose nanofibers (B) and the dispersing agent (C), and then melt kneading the polyamide resin (A) and molding the mixture,
a method of adding the dispersing agent (C) into a dispersion of the cellulose nanofibers (B) in water, drying the dispersion to prepare dried cellulose, and then adding the polyamide resin (A) to the dried cellulose and melt kneading and molding the mixture, and
a method of adding the dispersing agent (C) into a dispersion of the cellulose nanofibers (B) in water, and then adding the aqueous dispersion into a solution of the polyamide resin (A), and melt kneading and molding the mixture.

The amount of dispersing agent (C) in the polyamide resin molded body is preferably 5 to 100 parts by mass with respect to 100 parts by mass of the cellulose nanofibers (B) from the viewpoint of uniform dispersion of the cellulose nanofibers (B) in the polyamide resin molded body, and it is more preferably 10 to 70 parts by mass and most preferably 20 to 50 parts by mass.

The amount of dispersing agent (C) in the molded resin can be easily confirmed by a method commonly known to those skilled in the art. The confirmation method is not restricted, and the following is an example. A soluble portion 1 (resin and dispersing agent) and an insoluble portion 1 (cellulose and dispersing agent) are separated after dissolving a fragment of the molded resin into a solvent that dissolves the polyamide resin (A). The soluble portion 1 is reprecipitated with a solvent that does not dissolve the resin but dissolves the dispersing agent, separating an insoluble portion 2 (resin) and soluble portion 2 (dispersing agent). The insoluble portion 1 is dissolved in a solvent that dissolves the dispersing agent, separating a soluble portion 3 (dispersing agent) and an insoluble portion 3 (cellulose). The soluble portion 2 and soluble portion 3 are concentrated (drying, air-drying, reduced pressure drying) to allow quantitation of the dispersing agent (C). Identification and molecular weight measurement of the concentrated dispersing agent (C) can be carried out by the methods described above.

According to one aspect, the content of the dispersing agent (C) is preferably 0.3 mass% or more, 0.5 mass% or more or 1.0 mass% or more, and preferably 10.0 mass% or less, 5.0 mass% or less or 3.0 mass% or less, in both the polyamide resin composition and the molded resin.

<Metal ion component>

According to one aspect, the polyamide resin molded body may further comprise a metal ion component. The metal ion component may be a commercially available reagent or product. Metal ion components include copper compounds, metal (copper or non-copper) halides, alkali metal salts and alkaline earth metal salts.

The upper limit for the metal ion component content in the polyamide resin molded body of the embodiment is preferably 5 parts by mass, more preferably 2 parts by mass and even more preferably 0.5 parts by mass with respect to 100 parts by mass of the polyamide resin (A). The lower limit for the metal ion component content is preferably 0.005 parts by mass, more preferably 0.01 parts by mass and even more preferably 0.015 parts by mass with respect to 100 parts by mass of the polyamide resin (A). A metal ion component amount within this range will improve the abrasion resistance of the polyamide resin molded body in sliding test.

<Sliding agent>

According to one aspect, the polyamide resin molded body may further comprise a sliding agent. The sliding agent is a substance different from the polyamide resin (A) and dispersing agent (C). According to a typical aspect, the dispersing agent (C) is water-soluble in the sense defined by the present disclosure, while the sliding agent is not water-soluble.

The preferred lower limit for the sliding agent is 0.01 parts by mass, preferably 0.5 parts by mass and most preferably 1.0 parts by mass with respect to 100 parts by mass of the polyamide resin (A). The preferred upper limit for the sliding agent is 5 parts by mass, preferably 4 parts by mass and most preferably 3 parts by mass with respect to 100 parts by mass of the polyamide resin (A). If the amount of sliding agent is within this range it will be possible to inhibit wear rate , and the rupture frequency in repeated fatigue test will improve.

<Other components>

According to one aspect, the polyamide resin molded body may also contain various stabilizers used in thermoplastic resins of the prior art, in addition to the components mentioned above, in ranges that do not interfere with the object of the embodiment. Examples of stabilizers include, but are not limited to, the inorganic fillers, heat stabilizers and lubricant oils mentioned below. These may be used alone, or two or more may be used in combination. They may be commercially available reagents or products.

The inorganic filler may be, but is not particularly limited to, one or more compounds selected from the group consisting of fibrous particles, plate-like particles and inorganic pigments. Fibrous particles and plate-like particles are particles having an aspect ratio (that is, a fiber length/fiber diameter ratio for fibrous particles, or a long axis length/thickness ratio for plate-like particles) of 5 or more.

The heat stabilizer is preferably an antioxidant (such as a hindered phenol-based antioxidant) from the viewpoint of improving thermal stability of the resin composition.

Examples of hindered phenol-based antioxidants include, but are not limited to, the following: *n*-octadecyl-3-(3',5'-di-*t*-butyl-4'-hydroxyphenyl)-propionate, *n*-octadecyl-3-(3'-methyl-5'-*t*-butyl-4'-hydroxyphenyl)-propionate, *n*-tetradecyl-3-(3',5'-di-*t*-butyl-4'-hydroxyphenyl)-propionate, 1,6-hexanediol-bis-(3-(3,5-di-*t*-butyl-4-hydroxyphenyl)-propionate), 1,4-butanediol-bis-(3-(3,5-di-*t*-butyl-4-hydroxyphenyl)-propionate) and triethylene glycol-bis-(3-(3-*t*-butyl-5-methyl-4-hydroxyphenyl)-propionate).

Examples of hindered phenol-based antioxidants also include, but are not limited to, tetrakis-(methylene-3-(3',5'-di-*t*-butyl-4'-hydroxyphenyl)propionatemethane, 3,9-bis(2-(3-(3-*t*-butyl-4-hydroxy-5-methylphenyl)propionyloxy)-1, 1-dimethylethyl)-2,4,8,10-tetraoxaspiro(5,5)undecane, N,N'-bis-3-(3',5'-di-*t*-butyl-4-hydroxyphenol)propionyl hexamethylenediamine, N,N'-tetramethylenebis-3-(3-methyl-5'-*t*-butyl-4-hydroxyphenol)propionyldiamine, N,N'-bis-(3-(3,5-di-*t*-butyl-4-hydroxyphenol)propionyl)hydrazine, N-salicyloyl-N'-salicylidenehydrazine, 3-(N-salicyloyl)amino-1,2,4-triazole, N,N'-bis(2-(3-(3,5-di-butyl-4-hydroxyphenyl)propionyloxy)ethyl)oxyamide.

Among these hindered phenol-based antioxidants are triethylene glycol-bis-(3-(3-*t*-butyl-5-methyl-4-hydroxyphenyl)-propionate) and tetrakis-(methylene-3-(3',5'-di-*t*-butyl-4'-hydroxyphenyl)propionate)methane, from the viewpoint of increased thermal stability of the molded resin.

The amount of antioxidant added is not particularly restricted, but it is preferably in the range of 0.1 to 2 parts by mass of the antioxidant, such as a hindered phenol-based antioxidant, with respect to 100 parts by mass of the polyamide resin (A). Limiting the amount of stabilizer added to within this range can improve the handleability of the resin composition.

Specific examples of methods for producing a polyamide resin composition comprising a polyamide resin molded body include the following.

(1) A method of melt kneading the polyamide resin (A), and a mixed powder of the cellulose nanofibers (B) and dispersing agent (C) that have been mixed in a desired proportion.

(2) A method of melt kneading the polyamide resin (A) and the dispersing agent (C) as necessary, and then adding powder of the cellulose nanofibers (B) mixed in a desired proportion, with the dispersing agent (C) as necessary, and melt kneading the mixture.

(3) A method of melt kneading the polyamide resin (A), a mixed powder of the cellulose nanofibers (B) and dispersing agent (C) and water, mixed in a desired proportion, and then mixing in cellulose nanofibers (B), with water and the dispersing agent (C) as necessary, in a desired proportion, and melt kneading the entirety.

(4) A method of melt kneading the polyamide resin (A) and the dispersing agent (C) as necessary, and then adding the polyamide resin (A), cellulose nanofibers (B), dispersing agent (C) mixed powder and water, mixed in a desired proportion, and melt kneading the mixture.

(5) A method of melt kneading with the additions of (1) to (4) above, divided at the top and sides in any desired proportion, using a single-screw or twin-screw extruder.

The apparatus used to produce the polyamide resin composition is not particularly restricted, and any commonly employed kneader, such as single-screw or multiscrew kneading extruder, roller or Banbury mixer, may be used. A twin-screw extruder equipped with a pressure-reducing device and a side feeder is preferred.

Specific examples of methods for producing a polyamide resin molded body from a polyamide resin composition include the following.

(1) A method of obtaining extrusion molded articles using the polyamide resin composition obtained in the preceding paragraph for extrusion into a rod or tubular form with an extrusion molding machine, and cooling

(2) A method of obtaining molded articles using the polyamide resin composition obtained in the preceding paragraph for molding with an injection molding machine.

(3) A method of obtaining molded articles using the polyamide resin composition obtained in the preceding paragraph for molding with a blow molding machine.

<Use of polyamide resin molded body>

Since the polyamide resin molded body of this embodiment has excellent mechanical properties and rigidity on heating compared to conventional materials, while also exhibiting a remarkably improved low friction coefficient, low wear and/or low abrasion, it is suitable for use in automobiles, general worm gears for electric cars (EPS gears, for example), wiper motor gears, air conditioner gears, AFS gears, rack guides, window guide rails, timing chain guides, chain guides, sliding door pulleys, cam fills and robot gears. Because of its excellent slidability and durability, the gear of the embodiment can be used in a slider, lever, arm, clutch, felt clutch, roller, roller, key stem, key top, shutter, reel, shaft, joint, shaft, bearing, outsert molding resin part, insert molding resin part, chassis, tray or side plate, for example.

EXAMPLES

The present invention will now be further explained by examples, with the understanding that these examples are in no way limitative on the invention.

<Preparation of dispersing agent>

• Dispersing agent C-1:

In a 2 L autoclave there were placed 100 parts by mass of glycerin (Mn 92) and 0.6 parts by mass of KOH as a catalyst, and after replaced with nitrogen, 340 parts by mass of polyethylene oxide (Mn 325) was added by successive introduction over a period of 4 hours at 160°C. After completion of the reaction, 680 parts by mass of polypropylene oxide (Mn 650) was added by successive introduction over a period of 4 hours at 160°C. After completion of the reaction, the mixture was neutralized with 1.2 parts by mass of lactic acid, to obtain C-1 with an HLB of 6.5, a melting point of -30°C and a number-average molecular weight of 3000.

• Dispersing agent C-2:

In a 2 L autoclave there were placed 100 parts by mass of pentaerythritol (Mn 136) and 0.6 parts by mass of KOH as a catalyst, and after replaced nitrogen, 330 parts by mass of polyethylene oxide (Mn 450) was added by successive introduction over a period of 4 hours at 160°C. After completion of the reaction, 660 parts by mass of polypropylene oxide (Mn 900) was added by successive introduction over a period of 4 hours at 160°C. After completion of the reaction, the mixture was neutralized with 1.2 parts by mass of lactic acid, to obtain C-2 with an HLB of 6.5, a melting point of -30°C and a number-average molecular weight of 5500.

• Dispersing agent C-3:

In a 2 L autoclave there were placed 100 parts by mass of pentaerythritol (Mn 136) and 0.6 parts by mass of KOH as a catalyst, and after replaced nitrogen, 330 parts by mass of polyethylene oxide (Mn 2000) was added by successive introduction over a period of 4 hours at 160°C. After completion of the reaction, 660 parts by mass of polypropylene oxide (Mn 3000) was added by successive introduction over a period of 4 hours at 160°C. After completion of the reaction, the mixture was neutralized with 1.2 parts by mass of lactic acid, to obtain C-3 with an HLB of 6.5, a melting point of -30°C and a number-average molecular weight of 18,100.

• Dispersing agent C-4:

Commercially available polyethylene glycol (HLB20, melting point: 58°C, molecular weight: 3000) (Polyethylene Glycol 3000 by Sigma-Aldrich) was used as C-4.

• Dispersing agent C-5:

Commercially available aminohexanoic acid (HLB20, melting point: 205°C, molecular weight: 131) (A0312 by Tokyo Kasei Kogyo Co., Ltd.) was used as C-5.

The HLB value was determined by the following formula, using the Griffin method.

$$\text{HLB value} = 20 \times (\text{total formula weight of hydrophilic groups/molecular weight})$$

(In the formula, the formula weight of hydrophilic groups is the formula weight of polyethylene oxide segments.)

<Fabrication of mixed powder comprising chemically modified nanofibers and dispersing agent> (Fabrication of mixed powder 1)

A linter pulp 0.5 kg and dimethyl sulfoxide (DMSO) 9.5 kg were charged into a KAPPA VITA$^R$ rotary homogenizing mixer with a 35 L tank size. The system was operated for 4 hours at a rotational speed of 6000 rpm, a peripheral speed of 29 m/s and ordinary temperature, for defibration of the pulp (defibrating step). After then adding 10 L of purified water to the obtained defibrated and modified slurry and thoroughly stirring, it was placed in a dehydrator and concentrated. The obtained wet cake was again dispersed in 10 L of purified water and stirred and concentrated, and this rinsing procedure was repeated a total of 5 times to remove the unreacted reagent solvent, producing an aqueous dispersion of chemically modified nanofibers B-1 (number-average fiber diameter: 88 nm) (solid content: 10 mass%). Next, dispersing agent C-1 was added to the aqueous dispersion and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 1 of chemically modified nanofibers and the dispersing agent. The mixing mass ratio of B-1 and C-1 was 10:1.

(Fabrication of mixed powder 2)

A linter pulp 0.5 kg and dimethyl sulfoxide (DMSO) 9.5 kg were charged into a KAPPA VITA$^R$ rotary homogenizing mixer with a 35 L tank size. The system was operated for 4 hours at a rotational speed of 6000 rpm, a peripheral speed of 29 m/s and ordinary temperature, for defibration of the pulp (defibrating step). Subsequently, 0.16 kg of sodium bicarbonate and 1.05 kg of vinyl acetate were added, and the system was operated for 15 minutes at a rotational speed of 6000 rpm, a peripheral speed of 29 m/s and 60°C (defibrating/modifying step). After then adding 10 L of purified water to the obtained defibrated and modified slurry and thoroughly stirring, it was placed in a dehydrator and concentrated. The obtained wet cake was again dispersed in 10 L of purified water and stirred and concentrated, and this rinsing procedure was repeated a total of 5 times to remove the unreacted reagent solvent, and the finally obtained an aqueous dispersion of the chemically modified nanofibers B-2 (number-average fiber diameter: 86 nm) (solid content: 10 mass%). Next, dispersing agent C-1 was added to the aqueous dispersion and the mixture was stirred at 300 rpm with a planetary mixer (Asada Iron Works Co., Ltd.) using a jacket temperature of 60°C, while reducing the pressure to -90 kPa with a vacuum pump, and it was dried for 8 hours to obtain a mixed powder 2 of the chemically modified nanofibers and the dispersing agent. The mixing mass ratio of B-2 and C-1 was 10:1.

(Fabrication of mixed powder 3)

A linter pulp 0.5 kg and dimethyl sulfoxide (DMSO) 9.5 kg were charged into a KAPPA VITA[R] rotary homogenizing mixer with a 35 L tank size. The system was operated for 4 hours at a rotational speed of 6000 rpm, a peripheral speed of 29 m/s and ordinary temperature, for defibration of the pulp (defibrating step). Subsequently, 0.16 kg of sodium bicarbonate and 1.05 kg of vinyl acetate were added, and the system was operated for 40 minutes at a rotational speed of 6000 rpm, a peripheral speed of 29 m/s and 60°C (defibrating/modifying step). After then adding 10 L of purified water to the obtained defibrated and modified slurry and thoroughly stirring, it was placed in a dehydrator and concentrated. The obtained wet cake was again dispersed in 10 L of purified water and stirred and concentrated, and this rinsing procedure was repeated a total of 5 times to remove the unreacted reagent solvent, and the finally obtained an aqueous dispersion of the chemically modified nanofibers B-3 (number-average fiber diameter: 86 nm) (solid content: 10 mass%). Next, dispersing agent C-1 was added to the aqueous dispersion and the mixture was stirred at 300 rpm with a planetary mixer (Asada Iron Works Co., Ltd.) using a jacket temperature of 60°C, while reducing the pressure to -90 kPa with a vacuum pump, and it was dried for 8 hours to obtain a mixed powder 3 of the chemically modified nanofibers and the dispersing agent. The mixing mass ratio of B-3 and C-1 was 10:1.

(Fabrication of mixed powder 4)

A linter pulp 0.5 kg and dimethyl sulfoxide (DMSO) 9.5 kg were charged into a KAPPA VITA[R] rotary homogenizing mixer with a 35 L tank size. The system was operated for 4 hours at a rotational speed of 6000 rpm, a peripheral speed of 29 m/s and ordinary temperature, for defibration of the pulp (defibrating step). Subsequently, 0.16 kg of sodium bicarbonate and 1.05 kg of vinyl acetate were added and the system was operated for 2 hours at a rotational speed of 6000 rpm, a peripheral speed of 29 m/s and 60°C (defibrating/modifying step). After then adding 10 L of purified water to the obtained defibrated and modified slurry and thoroughly stirring, it was placed in a dehydrator and concentrated. The obtained wet cake was again dispersed in 10 L of purified water and stirred and concentrated, and this rinsing procedure was repeated a total of 5 times to remove the unreacted reagent solvent, and the finally obtained an aqueous dispersion of the chemically modified nanofibers B-4 (number-average fiber diameter: 88 nm) (solid content: 10 mass%). Next, dispersing agent C-1 was added to the aqueous dispersion of B-4 and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 4 of the chemically modified nanofibers and the dispersing agent. The mixing mass ratio of B-4 and C-1 was 10:1.

(Fabrication of mixed powder 5)

A linter pulp 0.5 kg and dimethyl sulfoxide (DMSO) 9.5 kg were charged into a KAPPA VITA[R] rotary homogenizing mixer with a 35 L tank size. The system was operated for 4 hours at a rotational speed of 6000 rpm, a peripheral speed of 29 m/s and ordinary temperature, for defibration of the pulp (defibrating step). Subsequently, 0.16 kg of sodium bicarbonate and 1.05 kg of vinyl acetate were added and the system was operated for 2 hours and 30 minutes at a rotational speed of 6000 rpm, a peripheral speed of 29 m/s and 60°C (defibrating/modifying step). After then adding 10 L of purified water to the obtained defibrated and modified slurry and thoroughly stirring, it was placed in a dehydrator and concentrated. The obtained wet cake was again dispersed in 10 L of purified water and stirred and concentrated, and this rinsing procedure was repeated a total of 5 times to remove the unreacted reagent solvent, and the finally obtained an aqueous dispersion of the chemically modified nanofibers B-5 (number-average fiber diameter: 84 nm) (solid content: 10 mass%). Next, dispersing agent C-1 was added to the aqueous dispersion and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 5 of the chemically modified nanofibers and the dispersing agent. The mixing mass ratio of B-5 and C-1 was 10:1.

(Fabrication of mixed powder 6)

A linter pulp 0.5 kg and dimethyl sulfoxide (DMSO) 9.5 kg were charged into a KAPPA VITA$^R$ rotary homogenizing mixer with a 35 L tank size. The system was operated for 4 hours at a rotational speed of 6000 rpm, a peripheral speed of 29 m/s and ordinary temperature, for defibration of the pulp (defibrating step). Subsequently, 0.16 kg of sodium bicarbonate and 1.05 kg of vinyl acetate were added and the system was operated for 3 hours at a rotational speed of 6000 rpm, a peripheral speed of 29 m/s and 60°C (defibrating/modifying step). After then adding 10 L of purified water to the obtained defibrated and modified slurry and thoroughly stirring, it was placed in a dehydrator and concentrated. The obtained wet cake was again dispersed in 10 L of purified water and stirred and concentrated, and this rinsing procedure was repeated a total of 5 times to remove the unreacted reagent solvent, and the finally obtained an aqueous dispersion of the chemically modified nanofibers B-6 (number-average fiber diameter: 85 nm) (solid content: 10 mass%). Next, dispersing agent C-1 was added to the aqueous dispersion and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 6 of the chemically modified nanofibers and the dispersing agent. The mixing mass ratio of B-6 and C-1 was 10:1.

(Fabrication of mixed powder 7)

A wood pulp 0.5 kg and dimethyl sulfoxide (DMSO) 9.5 kg were charged into a KAPPA VITA$^R$ rotary homogenizing mixer with a 35 L tank size. The system was operated for 4 hours at a rotational speed of 6000 rpm, a peripheral speed of 29 m/s and ordinary temperature, for defibration of the pulp (defibrating step). Subsequently, 0.16 kg of sodium bicarbonate and 1.05 kg of vinyl acetate were added, and the system was operated for 2 hours at a rotational speed of 6000 rpm, a peripheral speed of 29 m/s and 60°C (defibrating/modifying step). After then adding 10 L of purified water to the obtained defibrated and modified slurry and thoroughly stirring, it was placed in a dehydrator and concentrated. The obtained wet cake was again dispersed in 10 L of purified water and stirred and concentrated, and this rinsing procedure was repeated a total of 5 times to remove the unreacted reagent solvent, and the finally obtained an aqueous dispersion of the chemically modified nanofibers B-7 (number-average fiber diameter: 83 nm) (solid content: 10 mass%). Next, dispersing agent C-1 was added to the aqueous dispersion and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 7 of the chemically modified nanofibers and the dispersing agent. The mixing mass ratio of B-7 and C-1 was 10:1.

(Fabrication of mixed powder 8)

A linter pulp 0.5 kg and dimethyl sulfoxide (DMSO) 9.5 kg were charged into a uniaxial stirrer (DKV-1 φ125 mm Dissolver by Aimex Corp.), and the mixture was stirred at 500 rpm for 1 hour at ordinary temperature. The mixture was then fed to a bead mill (NVM-1.5 by Aimex Corp.) using a hose pump and circulated for 2 hours only with DMSO to obtain a defibrated slurry. During the circulation, the rotational speed of the bead mill was 2500 rpm and the peripheral speed was 12 m/s, while the beads used were made of zirconia with a size of φ2.0 mm and the fill rate of 70% (the slit gap of the bead mill was 0.6 mm). During the circulation, the slurry temperature was controlled at 40°C with a chiller to absorb heat generated by friction. The obtained defibrated slurry was then loaded into an explosion-proof disperser tank, after which 0.16 kg of sodium bicarbonate and 1.05 kg of vinyl acetate were added, the internal temperature of the tank was brought to 40°C, and stirring was performed for 1.5 hours (modifying step). After then adding 10 L of purified water to the obtained defibrated and modified slurry and thoroughly stirring, it was placed in a dehydrator and concentrated. The obtained wet cake was again dispersed in 10 L of purified water and stirred and concentrated, and this rinsing procedure was repeated a total of 5 times to remove the unreacted reagent solvent, and the finally obtained an aqueous dispersion of the chemically modified nanofibers B-8 (number-average fiber diameter: 83 nm) (solid content: 10 mass%). Subsequently, dispersing agent C-1 was added to the aqueous dispersion and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 8 of the chemically modified nanofibers and the dispersing agent. The mixing mass ratio of B-8 and C-1 was 10:1.

(Fabrication of mixed powder 9)

Dispersing agent C-2 was added to an aqueous dispersion of B-4 (solid content: 10 mass%) obtained in the same manner as described above for fabrication of the mixed powder 4, and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 9 of the chemically modified nanofibers and the dispersing agent. The mixing mass ratio of B-4 and C-2 was 10:1.

(Fabrication of mixed powder 10)

Dispersing agent C-3 was added to an aqueous dispersion of B-4 (solid content: 10 mass%) obtained in the same manner as described above for fabrication of the mixed powder 4, and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 10 of the chemically modified nanofibers and the dispersing agent. The mixing mass ratio of B-4 and C-3 was 10:1.

(Fabrication of mixed powder 11)

Dispersing agent C-4 was added to an aqueous dispersion of B-4 (solid content: 10 mass%) obtained in the same manner as described above for fabrication of the mixed powder 4, and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 11 of the chemically modified nanofibers and the dispersing agent. The mixing mass ratio of B-4 and C-4 was 10:1.

(Fabrication of powder 12)

An aqueous dispersion of B-4 (solid content: 10 mass%) obtained in the same manner as described above for fabrication of the mixed powder 4 was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a chemically modified nanofiber powder 12.

(Fabrication of mixed powder 13)

Dispersing agent C-5 was added to an aqueous dispersion of B-4 (solid content: 10 mass%) obtained in the same manner as described above for fabrication of the mixed powder 4, and the mixture was stirred at 300 rpm with a planetary mixer (Asada Iron Works Co., Ltd.) using a jacket temperature at 60°C, while reducing the pressure to -90 kPa with a vacuum pump, and it was dried for 8 hours to obtain a mixed powder 13 of the chemically modified nanofibers and the dispersing agent. The mixing mass ratio of B-4 and C-5 was 10:1.

(Fabrication of mixed powder 14)

Dispersing agent C-1 was added to an aqueous dispersion of B-4 (solid content: 10 mass%) obtained in the same manner as described above for fabrication of mixed powder 4, and the mixture was allowed to stand for 1 week for drying in a hot air drier at a drying temperature at 40°C, to obtain a mixed powder 14 of the chemically modified nanofibers and dispersing agent. The mixing mass ratio of B-4 and C-1 was 10:1.

(Fabrication of mixed powder 15)

Dispersing agent C-1 was added to an aqueous dispersion of B-4 (solid content: 10 mass%) obtained in the same manner as described above for fabrication of the mixed powder 4, and the mixture was stirred in a Henschel mixer (FM mixer (FM20) by Nippon Coke & Engineering Co., Ltd.) with a stirring blade (500 rpm) at a jacket temperature at 80°C, while reducing the pressure to -70 kPa with a vacuum pump, and it was dried for 8 hours to obtain a mixed powder 15 of the chemically modified nanofibers and the dispersing agent. The mixing mass ratio of B-4 and C-1 was 10:1.

<Fabrication of polyamide resin molded body>

A polyamide resin molded body was fabricated using the mixed powder or powder, or glass fibers for comparison.

[Comparative Example 1]

Upon adding 11 parts by mass of mixed powder 1 and 89 parts by mass of polyamide resin A-1 (nylon 6 resin (PA6), 1013B by Ube Industries, Ltd.), a small kneader ("Xplore", product name of Xplore Instruments) was used for circulated kneading for 5 minutes at 260°C, 100 rpm (shear rate: 1570 (1/s)), after which it was passed through a die to obtain a φ1 mm strand of a composite resin composition. Resin composite pellets obtained from the strand (after cutting the strand to 1 cm lengths) were melted at 260°C with an attached injection molding machine, and the resin was used to form a dumbbell-shaped test piece conforming to JIS K7127, as a flat test piece with 100 mm × 100 mm × 4 mm dimensions, which was used for evaluation.

[Example 1]

A resin composite was obtained in the same manner as Comparative Example 1, except that mixed powder 1 was changed to mixed powder 2.

[Example 2]

A resin composite was obtained in the same manner as Comparative Example 1, except that mixed powder 1 was changed to mixed powder 3.

[Example 3]

A resin composite was obtained in the same manner as Comparative Example 1, except that mixed powder 1 was changed to mixed powder 4.

[Example 4]

A resin composite was obtained in the same manner as Comparative Example 1, except that mixed powder 1 was changed to mixed powder 5.

[Example 5]

A resin composite was obtained in the same manner as Comparative Example 1, except that mixed powder 1 was changed to mixed powder 6.

[Comparative Example 2]

A resin composite was obtained in the same manner as Comparative Example 1, except that mixed powder 1 was changed to mixed powder 7.

[Comparative Example 3]

A resin composite was obtained in the same manner as Comparative Example 1, except that mixed powder 1 was changed to mixed powder 8.

[Example 6]

A resin composite was obtained in the same manner as Comparative Example 1, except that mixed powder 1 was changed to mixed powder 9.

[Example 7]

A resin composite was obtained in the same manner as Comparative Example 1, except that mixed powder 1 was changed to mixed powder 10.

[Example 8]

A resin composite was obtained in the same manner as Comparative Example 1, except that mixed powder 1 was changed to mixed powder 11.

[Comparative Example 4]

A resin composite was obtained in the same manner as Comparative Example 1, except that mixed powder 1 was changed to powder 12.

[Comparative Example 5]

A resin composite was obtained in the same manner as Comparative Example 1, except that mixed powder 1 was changed to mixed powder 13.

[Comparative Example 6]

A resin composite was obtained in the same manner as Comparative Example 1, except that mixed powder 1 was changed to mixed powder 14.

[Example 9]

A resin composite was obtained in the same manner as Comparative Example 1, except that mixed powder 1 was changed to mixed powder 15.

[Example 10]

Upon adding 11 parts by mass of mixed powder 4 and 89 parts by mass of polyamide resin A-2 (nylon 6,6 resin (PA66), LEONA 1300 by Asahi Kasei Corp.), a small kneader ("Xplore", product name of Xplore Instruments) was used for circulated kneading for 5 minutes at 280°C, 100 rpm (shear rate: 1570 (1/s)), after which it was passed through a die to obtain a $\varphi$1 mm strand of a composite resin composition. Resin composite pellets obtained from the strand (after cutting the strand to 1 cm lengths) were melted at 280°C with an attached injection molding machine, and the resin was used to form a dumbbell-shaped test piece conforming to JIS K7127, as a flat test piece with 100 mm $\times$ 100 mm $\times$ 4 mm dimensions, which was used for evaluation.

[Example 11]

A flat test piece was fabricated and evaluated in the same manner as Example 10, except that 34 parts by mass of polyamide resin A-1 (PA6) and 55 parts by mass of polyamide resin A-2 (PA66) were added as polyamide resins, and the melting temperature in the injection molding machine was 275°C.

[Example 12]

A flat test piece was fabricated and evaluated in the same manner as Example 10, except that 74 parts by mass of polyamide resin A-1 (PA6) and 15 parts by mass of polyamide resin A-3 (nylon 6,1 resin (PA6I)) were added as polyamide resins, the circulated kneading temperature in the small kneader was 270°C and the melting temperature in the injection molding machine was 270°C.

[Example 13]

A flat test piece was fabricated and evaluated in the same manner as Example 10, except that 74 parts by mass of polyamide resin A-2 (PA66) and 15 parts by mass of polyamide resin A-3 (nylon 6,1 resin (PA6I)) were added as polyamide resins, the circulated kneading temperature in the small kneader was 280°C and the melting temperature in the injection molding machine was 275°C.

[Example 14]

A flat test piece was fabricated and evaluated in the same manner as Example 10, except that 89 parts by mass of polyamide resin A-4 (nylon 6,6/6,1 (PA66/6I), LEONA 8200 by Asahi Kasei Corp.) was added as a polyamide resin, the circulated kneading temperature in the small kneader was 280°C and the melting temperature in the injection molding machine was 275°C.

[Example 15]

A flat test piece was fabricated and evaluated in the same manner as Example 10, except that 89 parts by mass of polyamide resin A-5 (nylon 6,10 (PA610), LEONA 3100 by Asahi Kasei Corp.) was added as a polyamide resin, the circulated kneading temperature in the small kneader was 280°C and the melting temperature in the injection molding machine was 275°C.

[Comparative Example 7]

A resin composite was obtained in the same manner as Example 10, except that mixed powder 4 was changed to mixed powder 14.

[Comparative Example 8]

A flat test piece was fabricated and evaluated in the same manner as Example 10, except that 11 parts by mass of glass fibers (T-249H by Nippon Electric Glass Co., Ltd.) and 89 parts by mass of PA6 were added, the circulated kneading temperature of the small kneader was 270°C and the melting temperature of the injection molding machine was 270°C.

[Comparative Example 9]

A pressure controlled liquid injection nozzle was fitted onto cylinder 6 of a twin-screw extruder with 13 cylinder blocks (OMEGA30H by Steer Co., L/D = 60), and cylinder 1 was set to water-cooled, cylinder 2 to 80°C, cylinder 3 to 150°C and cylinders 4 to 13 and the die to 250°C. While feeding 89 parts by mass of polyamide resin A-1 (nylon 6 resin (PA6), 1013B by Ube Industries, Ltd.) from the top of the extruder, 110 parts by mass of an aqueous dispersion of B-4 (solid content: 10 mass%), was added to the extruder at a flow rate of 200 cc/min using a pump, through the liquid addition nozzle of cylinder 6, and the mixture was melt kneaded, after which a $\varphi$1 mm strand of the composite resin composition was obtained through the die. Resin composite pellets obtained from the strand (after cutting the strand to 1 cm lengths) were melted at 260°C with an attached injection molding machine, and the resin was used to form a dumbbell-shaped test piece conforming to JIS K7127, as a flat test piece with 100 mm × 100 mm × 4 mm dimensions, which was used for evaluation.

<Evaluation methods>

• Mean fiber size of cellulose nanofibers (B)

The wet cake was diluted with *t*-butanol to 0.01 mass% and dispersed using a high-shear homogenizer ("ULTRA-TURRAX T18", trade name of IKA Corp.) with treatment conditions of 15,000 rpm × 3 min, cast onto an osmium-vapor deposited silicon substrate and air-dried, and then measured with a high-resolution scanning electron microscope (Regulus 8220 by Hitachi High-Technologies Corp.). The measurement was carried out with adjustment of the magnification so that at least 100 cellulose nanofibers could be observed, the short diameters (D) of 100 randomly selected cellulose nanofibers were determined, and the addition average for the 100 cellulose fibers was calculated.

• Weight-average molecular weight (Mw) and number-average molecular weight (Mn) of cellulose nanofibers (B)

Put the polyamide resin molded bodies prepared in Examples 1 to 15 and Comparative Examples 1 to 7 and 9 were into HFIP (hexafluoroisopropanol) to dissolve the polyamide, after which the remaining cellulose nanofibers were washed and dried, 0.88 g was weighed out and gently stirred, and 20 mL of purified water was added before allowing the mixture to stand for 1 day. The water and solid portion were then separated by centrifugation. After then adding 20 mL of acetone, the mixture was gently stirred and allowed to stand for 1 day. The acetone and solid portion were separated by centrifugation. After then adding 20 mL of N,N-dimethylacetamide, the mixture was gently stirred and allowed to stand for 1 day. Centrifugal separation was again carried out to separate the N,N-dimethylacetamide and solid content, and then 20 mL of N,N-dimethylacetamide was added and the mixture was gently stirred and allowed to stand for 1 day. The N,N-dimethylacetamide and solid content were separated by centrifugation, 19.2 g of a N,N-dimethylacetamide solution prepared to a lithium chloride content of 8 mass% was added to the solid portion, and the mixture was stirred with a stirrer while visually confirming dissolution. The cellulose-dissolving solution was filtered with a 0.45 μm filter, and the filtrate was supplied as a sample for gel permeation chromatography. The apparatus and measuring conditions used were as follows.

Apparatus: Tosoh Corp. HLC-8120
Column: TSKgel SuperAWM-H (6.0 mm I.D. $\times$ 15 cm) $\times$ 2
Detector: RI detector
Eluent: N,N-dimethylacetamide (lithium chloride: 0.2%)
Flow rate: 0.6 mL/min
Calibration curve: Based on pullulan

• Average content of alkali-soluble polysaccharides of cellulose nanofibers (B)

Put the polyamide resin molded bodies prepared in Examples 1 to 15 and Comparative Examples 1 to 7 and 9 into HFIP to dissolve the polyamide, the remaining cellulose nanofibers were washed and dried to obtain a powder, which was used to determine the alkali-soluble polysaccharide content, subtracting the $\alpha$-cellulose content from the holocellulose content by the method described in non-patent literature (Mokushitsu Kagaku Jikken Manual, ed. The Japan Wood Research Society, pp.92-97, 2000) (Wise method). The alkali-soluble polysaccharide content was calculated 3 times for each sample, and the number average for the calculated alkali-soluble polysaccharide contents was recorded as the average content of alkali-soluble polysaccharides.

• Degree of modification of cellulose nanofibers (B) (average degree of substitution: DS)

Put the polyamide resin molded bodies prepared in Examples 1 to 15 and Comparative Examples 1 to 7 and 9 into HFIP to dissolve the polyamide, the remaining cellulose nanofibers were washed, and then a porous sheet was fabricated from the aqueous dispersion by a paper-making method. The obtained porous sheet was used for evaluation of the infrared spectrum by ATR-IR with measurement using a Fourier transform infrared spectrometer (FT/IR-6200 by Jasco Corp.). The infrared spectrum was measured under the following conditions.

(Measuring conditions for infrared spectroscopy)

Number of scans: 64,
Wavenumber resolution: 4 cm$^{-1}$,
Measurement wavenumber range: 4000 to 600 cm$^{-1}$,
ATR crystal: diamond,
Incident angle: 45°

The IR index was calculated from the obtained IR spectrum using the following formula (5).

$$\text{IR Index} = \text{H1730/H1030} \qquad (5)$$

In formula (5), H1730 and H1030 are the absorbances at 1730 cm$^{-1}$ and 1030 cm$^{-1}$ (absorption bands for C-O stretching vibration of the cellulose backbone chain). The respective baselines used were a line connecting 1900 cm$^{-1}$ and 1500 cm$^{-1}$ and a line connecting 800 cm$^{-1}$ and 1500 cm$^{-1}$, each baseline being defined as the absorbance at absorbance = 0. The average degree of substitution (DS) was calculated from the IR index using the following formula (6).

$$\text{DS} = 4.13 \times \text{IR index} \qquad (6)$$

• Crystallinity of cellulose nanofibers (B)

The polyamide resin molded bodies prepared in Examples 1 to 15 and Comparative Examples 1 to 7 and 9 put into HFIP to dissolve the polyamide, the remaining cellulose nanofibers were washed, and then a porous sheet was fabricated from the aqueous dispersion by a paper-making method. The obtained porous sheet was measured by X-ray diffraction and the crystallinity was calculated by the following formula.

$$\text{Crystallinity (\%)} = [\text{I}_{(200)} - \text{I}_{(\text{amorphous})}]/\text{I}_{(200)} \times 100$$

$I_{(200)}$: Diffraction peak intensity due to 200 planes (2θ = 22.5°) in cellulose type I crystal $I_{(amorphous)}$: Amorphous halo peak intensity due to amorphous in cellulose type I crystal, peak intensity at angle of 4.5° lower than diffraction angle at 200 plane (2θ = 18.0°).

The apparatus and measuring conditions used were as follows.

Apparatus: MiniFlex (Rigaku Corp.)
Operating shaft: 2θ/θ
X-ray source: CuKα
Measuring method: Continuous
Measurement method continuous voltage: 40 kV
Current: 15 mA
Starting angle: 2θ = 5°
End angle: 2θ = 30°
Sampling width: 0.020°
Scan speed: 2.0°/min
Sample: Porous sheet attached to specimen holder.

• Thermal decomposition start temperature (Td) and 1 wt% weight reduction temperature of cellulose nanofibers (B)

Put the polyamide resin molded bodies prepared in Examples 1 to 15 and Comparative Examples 1 to 7 and 9 into HFIP to dissolve the polyamide, the remaining cellulose nanofibers were washed, and then a porous sheet was fabricated from the aqueous dispersion by a paper-making method. Thermal analysis of the obtained porous sheet was conducted by the following method.

Apparatus: EXSTAR6000 by SII Co.
Sample: Circular pieces cut out from the porous sheet were placed and stacked in an aluminum sample pan, in an amount of 10 mg.
Sample weight: 10 mg
Measuring conditions: Temperature rise from room temperature to 150°C at a temperature-rising rate of 10°C/min, in a nitrogen flow of 100 ml/min, and holding at 150°C for 1 hour, followed by cooling to 30°C. Subsequent temperature rise from 30°C to 450°C at a temperature-rising rate of 10°C/min.
Td calculation method: Calculation was from a graph with temperature on the abscissa and weight residual ratio % on the ordinate. Starting from the weight of chemically modified nanofibers at 150°C (with essentially all of the moisture content removed) (a weight reduction of 0 wt%) and rising the temperature, a straight line was obtained running through the temperature at 1 wt% weight reduction and the temperature at 2 wt% weight reduction. The temperature at the point of intersection between this straight line and a horizontal (baseline) running through the origin at weight reduction 0 wt%, was recorded as the thermal decomposition start temperature (Td).

1 wt% weight reduction temperature calculation method: the temperature at 1 wt% weight reduction used to calculate Td was recorded as the 1 wt% weight reduction temperature.

· Molecular weight measurement of dispersing agent (C)

Measurement was performed by GPC (gel permeation chromatography) when the molecular weight of the dispersing agent (C) used was 10,000 or more, or by HPLC (high performance liquid chromatography) when the molecular weight was less than 10,000, in terms of standard methyl polymethacrylate, under the following conditions. The standard methyl polymethacrylate used was an EasiVial polymer standard kit by Agilent Technologies (containing 12 methyl polymethacrylates with nominal peak top molecular weights (Mp) of 500 to 1,500,000 (nominal Mps of 2,000, 30,000, 300,000, 1,500,000 (Red), 1,000, 13,000, 130,000, 1,000,000 (Yellow), 500, 7,000, 70,000 and 500,000 (Green)).

[GPC measurement]

For a solid at ordinary temperature, it was heated at above the melting point to a melt and then dissolved in water for measurement.

Apparatus: HLC-8320GPC EcoSEC (Tosoh Corp.)
Column: Shodex GPC KD-802+KD-80 (Showa Denko K.K.)
Eluent: 0.01 M LiBr in DMF

Flow rate: 1.0 mL/min
Detector: RI
Measuring temperature: 50°C

[HPLC measurement]

For a solid at ordinary temperature, it was heated at above the melting point to a melt and then dissolved in water for measurement.

Apparatus: HP-1260 (Agilent Technologies)
Column: TSKgel ODS-80Ts (Tosoh Corp.)
Mobile phase: Solvent gradient with water/acetonitrile mobile phase
Detector: Evaporative light scattering detector (ELSD)
Measuring temperature: 40°C
Flow rate: 1 mL/min
Sample concentration : 1 mg/mL
Injection rate: 10 $\mu$L

· HLB value of dispersing agent (C)

The value obtained by dividing the molecular weight of the hydrophobic segment (propylene oxide) by the molecular weight of the hydrophilic segment (ethylene oxide) was used as the hydrophobic segment/hydrophilic segment ratio, based on the mixing ratio of the materials used to prepare the dispersing agent. The HLB value was determined by the following formula, using the Griffin method.

$$\text{HLB value} = 20 \times (\text{total formula weight of hydrophilic groups/molecular weight})$$

(In the formula, the formula weight of hydrophilic groups is the formula weight of polyethylene oxide segments.)
For the aminohexanoic acid used in Comparative Example 5, calculation was for the hydrophilic segment.

· Melting point of dispersing agent (C)

The peak top temperature of the endothermic peak appearing upon temperature rise from - 50°C at a temperature-rising rate of 10°C/min under a nitrogen atmosphere, using a differential scanning calorimeter (DSC) by Perkin-Elmer, was recorded as the melting point of the dispersing agent (C).

· Melting point (Tm), crystallization temperature (Tc) and half-width of temperature-falling crystallization peak of polyamide resin molded bodies

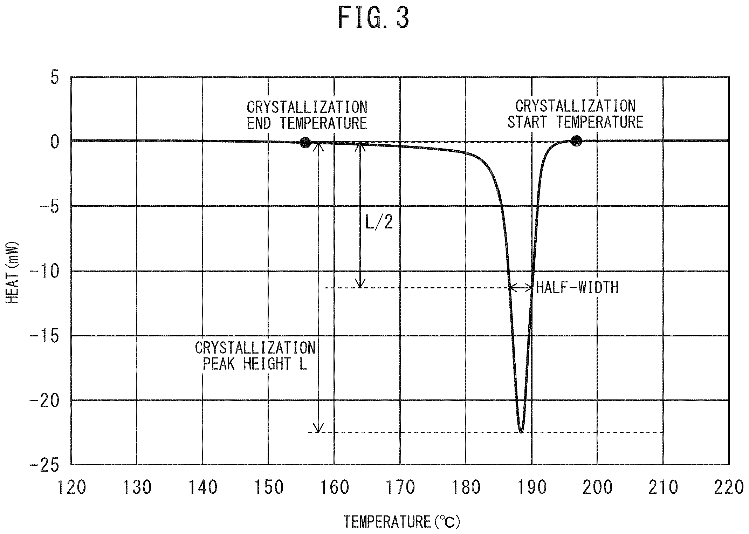

For each of the molded bodies of Examples 1 to 15 and Comparative Examples 1 to 9, the peak top temperature of the endothermic peak appearing upon temperature rise from 23°C at a temperature-rising rate of 10°C/min under a nitrogen atmosphere using a differential scanning calorimeter (DSC) by Perkin-Elmer under a nitrogen atmosphere, was recorded as the melting point (Tm) of the polyamide resin molded body. When two or more endothermic peaks appeared, the endothermic peak furthest at the high-temperature end was recorded as Tm. The peak top temperature of the exothermic peak appearing upon further raising the temperature to the melting point + 25°C and holding at that temperature for 5 minutes, and then falling the temperature at a temperature-falling rate of 10°C/min, was recorded as the crystallization temperature (Tc). When two or more exothermic peaks appeared, the peak top temperature of the exothermic peak furthest at the high-temperature end was recorded as Tc. Tm - Tc was calculated as an index of the crystallization rate of the molded article.
For the exothermic peak, the half-width of the temperature-falling crystallization peak was recorded as the full width at half maximum of the peak height L from the baseline, where the baseline was a line drawn so that the tangent of the DSC curve before the start of crystallization at the high-temperature end from the peak and the tangent of the DSC curve after completion of crystallization at the low-temperature end from the peak, were on the same straight line (see Fig. 3).

· Arithmetic mean surface roughness Sa of polyamide resin molded body surfaces

For the flat test pieces obtained in Examples 1 to 15 and Comparative Examples 1 to 9, the surface roughness (arithmetic mean surface roughness) of each molded body surface was measured using a confocal microscope (OPTELICS[R] H1200, product of Lasertec Corp.) according to ISO25178, at a magnification of 20x. The surface roughness was measured at 5 locations of each molded article, and the number-average value was recorded as the Sa value.

· Aggregate sizes in polyamide resin molded bodies

Each of the flat test pieces obtained in Examples 1 to 15 and Comparative Examples 1 to 9 was observed from the surface at 5 locations using an optical microscope (BX53 M by Olympus Corp.) at a magnification of 20x, and the number-average value of the sizes of the observed aggregates was recorded as the aggregate size. Pieces where aggregates could not be confirmed were indicated as "No aggregates".

· Flexural modulus of polyamide resin molded bodies

The flexural modulus of each of the dumbbell test pieces obtained in Examples 1 to 15 and Comparative Examples 1 to 9 was determined according to ISO178.

· Molding shrinkage rate of polyamide resin molded bodies

For each of the flat test pieces of Examples 1 to 15 and Comparative Examples 1 to 9, the molding shrinkage rate was calculated by the following formula from the flat die dimension in the MD direction and the dimension of the piece in the MD direction, with the MD direction as the direction of resin flow from the gate. The dimensions of each piece were measured after injection molding, and after aging for 24 hours in a thermo-hygrostat under conditions at 23°C, 50% RH

$$\text{Molding shrinkage rate} = \text{Dimension of test piece (MD direction)} / \text{Mold dimension (MD direction)} \times 100 \ (\%)$$

· Coefficient of linear expansion of polyamide resin molded bodies

Using each of the flat test pieces of Examples 1 to 15 and Comparative Examples 1 to 9, with the MD direction as the direction of resin flow from the gate, a rectangular solid sample was cut out to 4 mm vertical, 4 mm horizontal and 10 mm length using a precision cut saw, so that the lengthwise direction was the MD direction, and was measured according to ISO11359-2 in a measuring temperature range at -10°C to 80°C, calculating the expansion coefficient in the MD direction between 0°C and 60°C.

· Evaluation of friction coefficient, wear depth and pin tip wear (abrasion wear property) of polyamide resin molded bodies

The flat test pieces obtained in Examples 1 to 15 and Comparative Examples 1 to 9 were each subjected to a sliding test using a reciprocating friction wear tester (Model AFT-15MS by Toyo Precision Parts Mfg. Co., Ltd.) and a SUS304 ball (5 mm-diameter sphere) as the counterpart material, with a linear speed of 30 mm/sec, a reciprocal distance of 10 mm, a temperature at 23°C, and 50% humidity. The friction coefficient used was the value obtained after the following test conditions. The wear late was measured as the wear depth of the sample after the sliding test using a confocal microscope (OPTELICS[R] H1200, Lasertec Corp.). The wear depth was the number-average value of measurement with n = 4, rounding to the first decimal place. The measured locations were locations 5 mm from the edges of the wear marks, at equal spacings. A lower value for the wear depth was evaluated as being a more excellent wear property. For the pin tip wear, the SUS ball was observed under an optical microscope after completion of the test, assigning "poor" when nicks were seen in the sliding direction, or otherwise "good".
Test conditions: 2 kgf load, 10,000 passes

· Chromaticity (b value) of polyamide resin molded bodies

Each of the flat test pieces obtained in Examples 1 to 15 and Comparative Examples 1 to 9 was measured for b value with a CM-25cG spectrocolorimeter by Konica Minolta Holdings, Inc., as an index of heat degradation. A b value of >25 was evaluated as "poor", and a b value of <25 was evaluated as "good".

The results are shown in Tables 1 and 2.

[Table 1]

Table 1

| | | | Units | Comparative Example 1 | Example 1 | Example 2 | Example 3 | Example 4 | Example 5 | Comparative Example 2 | Comparative Example 3 | Example 6 | Example 7 | Example 8 | Comparative Example 4 | Comparative Example 5 | Comparative Example 6 | Example 9 |
|---|---|---|---|---|---|---|---|---|---|---|---|---|---|---|---|---|---|---|
| (A) | A-1 | Content | mass % | 89 | 89 | 89 | 89 | 89 | 89 | 89 | 89 | 89 | 89 | 89 | 90 | 89 | 89 | 89 |
| | A-2 | Content | mass % | - | - | - | - | - | - | - | - | - | - | - | - | - | - | - |
| | A-3 | Content | mass % | - | - | - | - | - | - | - | - | - | - | - | - | - | - | - |
| | A-4 | Content | mass % | - | - | - | - | - | - | - | - | - | - | - | - | - | - | - |
| | A-5 | Content | mass % | - | - | - | - | - | - | - | - | - | - | - | - | - | - | - |

(continued)

| | | | Units | Comparative Example 1 | Example 1 | Example 2 | Example 3 | Example 4 | Example 5 | Comparative Example 2 | Comparative Example 3 | Example 6 | Example 7 | Example 8 | Comparative Example 4 | Comparative Example 5 | Comparative Example 6 | Example 9 |
|---|---|---|---|---|---|---|---|---|---|---|---|---|---|---|---|---|---|---|
| (B) | CNF | Type | - | B-1 | B-2 | B-3 | B-4 | B-5 | B-6 | B-7 | B-8 | B-4 | B-4 | B-4 | B-4 | B-4 | B-4 | B-4 |
| | | Mw | - | 38,0000 | 38,0000 | 377,000 | 373,000 | 37,0000 | 365,000 | 27,0000 | 16,0000 | 373,000 | 373,000 | 373,000 | 373,000 | 373,000 | 373,000 | 373,000 |
| | | Mw/Mn | - | 4.7 | 4.7 | 4.7 | 4.8 | 4.8 | 4.9 | 6.4 | 4.2 | 4.8 | 4.8 | 4.8 | 4.8 | 4.8 | 4.8 | 4.8 |
| | | Crystallinity | % | 82 | 80 | 77 | 75 | 72 | 64 | 68 | 54 | 75 | 75 | 75 | 75 | 75 | 75 | 75 |
| | | Alkali-soluble polysaccharide | mass % | 3.6 | 3.6 | 3.6 | 3.7 | 3.6 | 3.7 | 18.7 | 4.1 | 3.7 | 3.7 | 3.7 | 3.7 | 3.7 | 3.7 | 3.7 |
| | | Degree of modification | - | 0 | 0.1 | 0.3 | 0.9 | 1.2 | 1.5 | 0.9 | 0.9 | 0.9 | 0.9 | 0.9 | 0.9 | 0.9 | 0.9 | 0.9 |
| | | 1% Weight change temperature | °C | 265 | 280 | 295 | 309 | 309 | 310 | 268 | 268 | 309 | 309 | 309 | 309 | 309 | 309 | 309 |
| | | Td | °C | 244 | 260 | 276 | 291 | 290 | 290 | 247 | 250 | 291 | 291 | 291 | 291 | 291 | 291 | 291 |
| | | Content | mass % | 10 | 10 | 10 | 10 | 10 | 10 | 10 | 10 | 10 | 10 | 10 | 10 | 10 | 10 | 10 |
| GF | | Content | mass % | - | - | - | - | - | - | - | - | - | - | - | - | - | - | - |

(continued)

| | | | Units | Compara-tive Ex-ample 1 | Exam-ple 1 | Exam-ple 2 | Exam-ple 3 | Exam-ple 4 | Exam-ple 5 | Compara-tive Ex-ample 2 | Compara-tive Ex-ample 3 | Exam-ple 6 | Exam-ple 7 | Exam-ple 8 | Compar-ativ e Ex-ample 4 | Compar-ativ e Ex-ample 5 | Compara-tive Ex-ample 6 | Exam-ple 9 |
|---|---|---|---|---|---|---|---|---|---|---|---|---|---|---|---|---|---|---|
| (C) | Dispers-ing agent | Type | - | C-1 | C-1 | C-1 | C-1 | C-1 | C-1 | C-1 | C-1 | C-2 | C-3 | C-4 | - | C-5 | C-1 | C-1 |
| | | Melting point | °C | -30 | -30 | -30 | -30 | -30 | -30 | -30 | -30 | -30 | -30 | 58 | - | 205 | -30 | -30 |
| | | Molecular weight | - | 3000 | 3000 | 3000 | 3000 | 3000 | 3000 | 3000 | 3000 | 5500 | 18100 | 3000 | - | 131 | 3000 | 3000 |
| | | HLB value | - | 6.5 | 6.5 | 6.5 | 6.5 | 6.5 | 6.5 | 6.5 | 6.5 | 6.5 | 6.5 | 20 | - | 20 | 6.5 | 6.5 |
| | | Content | mass % | 1 | 1 | 1 | 1 | 1 | 1 | 1 | 1 | 1 | 1 | 1 | - | 1 | 1 | 1 |
| Drying method | | | | PM | PM | PM | PM | PM | PM | PM | PM | PM | PM | PM | PM | PM | Hot air | HM |

(continued)

| Evalua-tion | | Units | Compara-tive Ex-ample 1 | Exam-ple 1 | Exam-ple 2 | Exam-ple 3 | Exam-ple 4 | Exam-ple 5 | Compara-tive Ex-ample 2 | Compara-tive Ex-ample 3 | Exam-ple 6 | Exam-ple 7 | Exam-ple 8 | Compar-ativ e Ex-ample 4 | Compar-ativ e Ex-ample 5 | Compara-tive Ex-ample 6 | Exam-ple 9 |
|---|---|---|---|---|---|---|---|---|---|---|---|---|---|---|---|---|---|
| | Melting point Tm | °C | 222 | 222 | 222 | 222 | 222 | 222 | 222 | 222 | 222 | 222 | 222 | 222 | 222 | 222 | 222 |
| | Crystallization temperature Tc | °C | 194 | 191 | 190 | 188 | 188 | 187 | 190 | 189 | 187 | 186 | 188 | 194 | 194 | 195 | 188 |
| | Crystallization rate Tm - Tc | °C | 28 | 31 | 32 | 34 | 34 | 35 | 32 | 33 | 35 | 36 | 34 | 28 | 28 | 27 | 34 |
| | Half-width of temperature-decreasing crystallization peak | °C | 62 | 5.5 | 4.8 | 3.5 | 3.8 | 4.5 | 6.2 | 6.3 | 3.6 | 3.5 | 3.7 | 6.5 | 6.7 | 6.3 | 3.1 |
| | Molded article surface Sa | Nm | 0.7 | 0.5 | 0.4 | 0.4 | 0.4 | 0.5 | 0.5 | 0.5 | 0.4 | 0.4 | 0.5 | 1.2 | 0.9 | 1.1 | 0.4 |
| | Aggregate size | μm | 2.7 | 1.3 | ND | ND | ND | 1.2 | 2.5 | 22 | ND | ND | ND | 25 | 7.5 | 8.5 | ND |
| | Molding shrinkage (MD) | % | 0.8 | 0.7 | 0.6 | 0.6 | 0.6 | 0.7 | 0.9 | 0.8 | 0.6 | 0.6 | 0.7 | 1.1 | 0.9 | 0.9 | 0.6 |
| | Coefficient of linear expansion (MD) | ppm/K | 54 | 49 | 40 | 36 | 39 | 47 | 55 | 53 | 36 | 35 | 44 | 63 | 57 | 61 | 37 |
| | Flexural modulus (23°C) | GPa | 4.3 | 4.9 | 5.3 | 5.5 | 5.3 | 4.8 | 4.4 | 4.3 | 5.5 | 5.5 | 5.0 | 3.4 | 3.5 | 3.5 | 5.4 |
| | Friction coefficient | - | 0.35 | 0.24 | 0.17 | 0.16 | 0.16 | 0.25 | 0.41 | 0.45 | 0.16 | 0.17 | 0.22 | 0.55 | 0.42 | 0.41 | 0.18 |
| | Wear depth | μm | 54 | 35 | 23 | 20 | 21 | 39 | 58 | 50 | 20 | 20 | 31 | 78 | 75 | 63 | 18 |
| | Pin tip wear | - | Good | Good | Good | Good | Good | Good | Good | Good | Good | Good | Good | Good | Good | Good | Good |
| | Chromaticity (b value) | - | Poor | Good | Good | Good | Good | Good | Poor | Poor | Good | Good | Good | Good | Good | Good | Good |

[Table 2]

Table 2

| | | | Units | Example 10 | Example 11 | Example 12 | Example 13 | Example 14 | Example 15 | Comparative Example 7 | Comparative Example 8 | Comparative Example 9 |
|---|---|---|---|---|---|---|---|---|---|---|---|---|
| (A) | A-1 | Content | mass% | - | 34 | 74 | - | - | - | - | 90 | 89 |
| | A-2 | Content | mass% | 89 | 55 | - | 74 | - | - | 89 | - | - |
| | A-3 | Content | mass% | - | - | 15 | 15 | - | - | - | - | - |
| | A-4 | Content | mass% | - | - | - | - | 89 | - | - | - | - |
| | A-5 | Content | mass% | - | - | - | - | - | 89 | - | - | - |
| (B) | CNF | Type | - | B-4 | B-4 | B-4 | B-4 | B-4 | B-4 | B-4 | - | B-4 |
| | | Mw | - | 373,000 | 373,000 | 373,000 | 373,000 | 373,000 | 373,000 | 373,000 | - | 373,000 |
| | | Mw/Mn | - | 4.8 | 4.8 | 4.8 | 4.8 | 4.8 | 4.8 | 4.8 | - | 4.8 |
| | | Crystallinity | % | 75 | 75 | 75 | 75 | 75 | 75 | 75 | - | 75 |
| | | Alkali-soluble polysaccharide | mass% | 3.7 | 3.7 | 3.7 | 3.7 | 3.7 | 3.7 | 3.7 | - | 3.7 |
| | | Degree of modification | - | 0.9 | 0.9 | 0.9 | 0.9 | 0.9 | 0.9 | 0.9 | - | 0.9 |
| | | 1% Weight change temperature | °C | 309 | 309 | 309 | 309 | 309 | 309 | 309 | - | 309 |
| | | Td | °C | 291 | 291 | 291 | 291 | 291 | 291 | 291 | - | 291 |
| | | Content | mass% | 10 | 10 | 10 | 10 | 10 | 10 | 10 | - | 10 |
| GF | | Content | mass% | - | - | - | - | - | - | - | 10 | - |
| (C) | Dispersing agent | Type | - | C-1 | C-1 | C-1 | C-1 | C-1 | C-1 | C-1 | - | C-1 |
| | | Melting point | °C | -30 | -30 | -30 | -30 | -30 | -30 | -30 | - | -30 |
| | | Molecular weight | - | 20,000 | 20,000 | 20,000 | 20,000 | 20,000 | 20,000 | 3000 | - | 3000 |
| | | HLB value | - | 6.5 | 6.5 | 6.5 | 6.5 | 6.5 | 6.5 | 6.5 | - | 6.5 |
| | | Content | mass% | 1 | 1 | 1 | 1 | 1 | 1 | 1 | - | 1 |
| Drying method | | | | PM | PM | PM | PM | PM | PM | Hot air | - | - |

(continued)

| | | Units | Example 10 | Example 11 | Example 12 | Example 13 | Example 14 | Example 15 | Comparative Example 7 | Comparative Example 8 | Comparative Example 9 |
|---|---|---|---|---|---|---|---|---|---|---|---|
| Evaluation | Melting point Tm | °C | 264 | 249 | 217 | 248 | 244 | 215 | 264 | 222 | 222 |
| | Crystallization temperature Tc | °C | 224 | 199 | 165 | 195 | 184 | 175 | 237 | 194 | 194 |
| | Crystallization rate Tm - Tc | °C | 40 | 50 | 52 | 53 | 60 | 40 | 27 | 28 | 28 |
| | Half-width of temperature-decreasing crystallization peak | °C | 3.1 | 3.8 | 4.5 | 4.3 | 4.8 | 3.1 | 6.1 | 13 | 6.1 |
| | Molded article surface Sa | Nm | 0.3 | 0.2 | 0.2 | 0.2 | 0.2 | 0.3 | 1.0 | 0.6 | 0.8 |
| | Aggregate size | $\mu$m | ND | ND | ND | ND | ND | ND | 6.6 | - | 5.8 |
| | Molding shrinkage (MD) | % | 0.5 | 0.4 | 0.4 | 0.4 | 0.3 | 0.5 | 1.1 | 0.8 | 0.8 |
| | Coefficient of linear expansion (MD) | ppm/K | 32 | 29 | 28 | 28 | 25 | 33 | 54 | 42 | 55 |
| | Flexural modulus (23°C) | GPa | 6.6 | 6.2 | 5.5 | 6.5 | 6.4 | 5.3 | 3.9 | 4.1 | 3.8 |
| | Friction coefficient | - | 0.14 | 0.11 | 0.10 | 0.10 | 0.10 | 0.15 | 0.38 | 0.51 | 0.35 |
| | Wear depth | $\mu$m | 17 | 11 | 10 | 10 | 10 | 18 | 48 | 45 | 55 |
| | Pin tip wear | - | Good | Good | Good | Good | Good | Good | Good | Poor | Good |
| | Chromaticity (b value) | - | Good | Good | Good | Good | Good | Good | Good | Good | Good |

INDUSTRIAL APPLICABILITY

A polyamide resin molded body provided according to the present invention can be suitably applied in a sliding part, for example.

**Claims**

1.  A polyamide resin molded body composed of a polyamide resin composition comprising:

    (A) a polyamide resin,
    (B) chemically modified cellulose nanofibers having a weight-average molecular weight (Mw) of 100,000 or more, a ratio (Mw/Mn) of weight-average molecular weight (Mw) and number-average molecular weight (Mn) of 6 or less, an average content of alkali-soluble polysaccharides of 12 mass% or less, and a crystallinity of 60% or more,
    (C) a dispersing agent having a melting point of 80°C or less and a number-average molecular weight of 1000 to 50,000,

    wherein the melting point (Tm) and crystallization temperature (Tc) of the polyamide resin molded body satisfy the relationship represented by the following formula (1):

    $$\text{Tm - Tc} \geq 30°C \qquad (1).$$

2.  A polyamide resin molded body composed of a polyamide resin composition comprising:

    (A) a polyamide resin, and
    (B) chemically modified cellulose nanofibers having a weight-average molecular weight (Mw) of 100,000 or more, a ratio (Mw/Mn) of weight-average molecular weight (Mw) and number-average molecular weight (Mn) of 6 or less, an average content of alkali-soluble polysaccharides of 12 mass% or less, and a crystallinity of 60% or more,

    wherein the half-width of the temperature-decreasing crystallization peak is 6.0°C or less, as the half-width of the crystallization peak on temperature rise of the polyamide resin molded body to melting point (Tm) + 25°C at 10°C/min, holding for 3 minutes and temperature fall at 10°C/min, using a differential scanning calorimeter (DSC).

3.  The polyamide resin molded body according to claim 2, wherein the melting point (Tm) and crystallization temperature (Tc) of the polyamide resin molded body satisfy the relationship represented by the following formula (1):

    $$\text{Tm - Tc} \geq 30°C \qquad (1).$$

4.  The polyamide resin molded body according to claim 2 or 3, which further comprises (C) a dispersing agent having a melting point of 80°C or less and a number-average molecular weight of 1000 to 50,000.

5.  The polyamide resin molded body according to claim 1 or 4, wherein the HLB value of the dispersing agent (C) is 0.1 or more and less than 8.0.

6.  The polyamide resin molded body according to any one of claims 1 to 5, wherein the average degree of chemical modification of the chemically modified cellulose nanofibers (B) is 0.3 to 1.2.

7.  The polyamide resin molded body according to any one of claims 1 to 6, wherein the chemically modified cellulose nanofibers (B) are esterified cellulose nanofibers.

8.  The polyamide resin molded body according to any one of claims 1 to 7, wherein the polyamide resin (A) comprises at least one selected from the group consisting of polyamide 6,6, polyamide 6, polyamide 6,1, polyamide 6,10, and copolymers of two or more of the same.

# FIG. 1

(A)

(B)

FIG. 2

# FIG. 3

EP 4 053 217 A1

**INTERNATIONAL SEARCH REPORT**

International application No.

PCT/JP2020/040940

A.   CLASSIFICATION OF SUBJECT MATTER
C0877/00(2006.01)i; C08K 11/00(2006.01)i; C08L 1/08(2006.01)i
FI: C08L77/00; C08L1/08; C08K11/00

According to International Patent Classification (IPC) or to both national classification and IPC

B.   FIELDS SEARCHED

Minimum documentation searched (classification system followed by classification symbols)
C08L77/00; C08K11/00; C08L1/08

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
CAplus/REGISTRY (STN)

C.   DOCUMENTS CONSIDERED TO BE RELEVANT

| Category* | Citation of document, with indication, where appropriate, of the relevant passages | Relevant to claim No. |
|---|---|---|
| A | JP 2019-006875 A (ASAHI KASEI CORPORATION) 17 January 2019 (2019-01-17) claims, examples | 1–8 |
| A | JP 2010-077248 A (TEIJIN LTD.) 08 April 2010 (2010-04-08) claims, examples | 1–8 |
| A | JP 2019-043979 A (ASAHI KASEI CORPORATION) 22 March 2019 (2019-03-22) claims, examples | 1–8 |
| P, A | WO 2019/230970 A1 (ASAHI KASEI CORPORATION) 05 December 2019 (2019-12-05) claims, examples | 1–8 |
| P, A | JP 6681499 B1 (ASAHI KASEI CORPORATION) 15 April 2020 (2020-04-15) claims, examples | 1–8 |

☐   Further documents are listed in the continuation of Box C.          ☒   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 January 2021 (04.01.2021) | 12 January 2021 (12.01.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/040940

| Patent Documents referred in the Report | Publication Date | Patent Family | Publication Date |
|---|---|---|---|
| JP 2019-006875 A | 17 Jan. 2019 | (Family: none) | |
| JP 2010-077248 A | 08 Apr. 2010 | (Family: none) | |
| JP 2019-043979 A | 22 Mar. 2019 | (Family: none) | |
| WO 2019/230970 A1 | 05 Dec. 2019 | (Family: none) | |
| JP 6681499 B1 | 15 Apr. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006054774 A
- JP 2017171698 A
- JP 2014248824 A
- JP 7228775 A
- JP 2003055549 A

### Non-patent literature cited in the description

- Polymer Process Engineering. Prentice-Hall, Inc, 1994, 291-294
- Mokushitsu Kagaku Jikken Manual. The Japan Wood Research Society, 2000, 92-97
- **R.F. FODERS.** *Polymer Engineering & Science,* 1974, vol. 12 (10), 2359-2370